(19) Europäisches Patentamt
European Patent Office
Office européen des brevets

(11) **EP 3 659 781 A1**

(12) **EUROPEAN PATENT APPLICATION**

(43) Date of publication:
**03.06.2020 Bulletin 2020/23**

(21) Application number: **19208422.6**

(22) Date of filing: **12.11.2019**

(51) Int Cl.:
**B29C 64/118** (2017.01)     **B29C 64/106** (2017.01)
**B29C 64/295** (2017.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2018   JP 2018221725**
**08.02.2019   JP 2019022028**
**21.05.2019   JP 2019095494**

(71) Applicant: **Ricoh Company, Ltd.**
**Tokyo 143-8555 (JP)**

(72) Inventors:
• **TSUJI, Masato**
  **Tokyo, 143-8555 (JP)**
• **ITO, Yoichi**
  **Tokyo, 143-8555 (JP)**
• **ARAO, Tsuyoshi**
  **Tokyo, 143-8555 (JP)**
• **TAKEYAMA, Yoshinobu**
  **Tokyo, 143-8555 (JP)**
• **KAKUTA, Yoichi**
  **Tokyo, 143-8555 (JP)**
• **NAKAMURA, Soichi**
  **Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **MODELING DEVICE AND METHOD**

(57)     A modeling device (1) includes a discharger (10), a first mover (32, 33, 34), a modifier (20), and a second mover (201, 205). The discharger (10) is configured to discharge a melted modeling material. The first mover (32, 33, and 34) is configured to move the discharger and a modeling platform (3) on which the modeling material (FM) is discharged by the discharger (10), relative to each other. The modifier (20) is configured to modify a layer formed of the modeling material (FM) discharged by the discharger (10). The second mover (201, 205) is configured to move the modifier (20) relative to the discharger (10). The second mover (201, 205) is configured to move the modifier (20) along a movement path in which an orientation of the modifier (20) is maintained with respect to a three-axis Cartesian coordinate system.

FIG.1

**Description**

BACKGROUND OF THE INVENTION

1. Field of the Invention

The present invention relates to a modeling device and a method.

2. Description of the Related Art

In a three-dimensional modeling device that performs modeling by depositing layers one on top of another, a technique of modifying surfaces of the layers and then depositing the layers in order to prevent reduction in strength in a deposition direction of a three-dimensional modeled object has been known.

To modify the surfaces of the layers, a configuration in which a modifier that modifies the surfaces of the layers is mounted on a rotary table and the modifier is moved to a position to be modified along a circumference by driving the rotary table has been disclosed (see Japanese Laid-open Patent Publication No. 2018-122454).

However, it is necessary to move the modifier to modify the surfaces of the layers, and this affects a production time. Therefore, there is a demand for improvement in reducing movement of the modifier.

The present invention has been conceived in view of the foregoing situations, and has an object to provide a modeling device and a method capable of reducing movement of a modifier.

SUMMARY OF THE INVENTION

According an aspect of the present invention, a modeling device includes a discharger, a first mover, a modifier, and a second mover. The discharger is configured to discharge a melted modeling material. The first mover is configured to move the discharger and a modeling platform on which the modeling material is discharged by the discharger, relative to each other. The modifier is configured to modify a layer formed of the modeling material discharged by the discharger. The second mover is configured to move the modifier relative to the discharger. The second mover is configured to move the modifier along a movement path in which an orientation of the modifier is maintained with respect to a three-axis Cartesian coordinate system.

According to the present invention, it is possible to reduce movement of the modifier.

BRIEF DESCRIPTION OF THE DRAWINGS

FIG. 1 is a diagram illustrating a configuration example of a three-dimensional modeling device;

FIG. 2 is a cross-sectional view illustrating a configuration of a discharge module;
FIG. 3 is a diagram illustrating a configuration example of a modification module;
FIG. 4 is a diagram for explaining a mounting angle of a laser light source;
FIG. 5 is a diagram illustrating a configuration example of an XY stage;
FIG. 6 is a diagram illustrating a hardware configuration example of the three-dimensional modeling device;
FIG. 7 is a diagram for explaining moving ranges in which the modification modules move;
FIG. 8 is a schematic diagram illustrating how the modification module moves in accordance with a modeling direction of a discharge nozzle;
FIG. 9 is a diagram for explaining a difference in effects between when the modification modules are moved by the XY stages and when the modification modules are moved by a rotary table;
FIG. 10 is a diagram illustrating an example in which identical modification modules are combined with a first discharge nozzle that discharges a model material and a second discharge nozzle that discharges a support material;
FIGS. 11A to 11C are schematic diagrams illustrating states of a modeled object at the time of forming an upper layer;
FIGS. 12A to 12C are schematic diagrams illustrating states of the modeled object at the time of forming the upper layer;
FIGS. 13A to 13C are schematic diagrams illustrating states of the modeled object at the time of forming the upper layer;
FIGS. 14A to 14C are schematic diagrams illustrating states of the modeled object at the time of forming the upper layer;
FIG. 15 is a schematic diagram illustrating an example of a reheating range of the modification module;
FIG. 16 is a flowchart illustrating an example of entire modeling operation performed by the three-dimensional modeling device;
FIG. 17 is a flowchart illustrating an example of modification control;
FIG. 18 is a diagram for explaining a first movement control pattern;
FIG. 19 is a diagram for explaining a second movement control pattern;
FIG. 20 is a diagram for explaining a third movement control pattern;
FIG. 21 is a diagram for explaining a fourth movement control pattern;
FIG. 22 is a diagram for explaining a fifth movement control pattern;
FIG. 23 is a diagram for explaining a sixth movement control pattern;
FIG. 24 is a diagram for explaining a seventh movement control pattern;

FIGS. 25A to 25C are detailed perspective views of parts in the vicinity of nozzles and the XY stages as a pair;

FIG. 26 is a diagram illustrating moving coordinate systems of the discharge module and each of the XY stages in an eighth movement control pattern;

FIG. 27 is a diagram for explaining how to determine the XY stage for performing laser light irradiation;

FIG. 28 is a diagram illustrating a movement path of each of the XY stages in a counterclockwise direction and a switching timing of the XY stage that is responsible for later light irradiation;

FIG. 29 is a diagram illustrating a movement path of each of the XY stages in a clockwise direction and a switching timing of the XY stage that is responsible for laser light irradiation;

FIG. 30 is a diagram illustrating a coordinate to which a rear XY stage moves (a laser coordinate at which laser light irradiation is performed) at a corner portion at which the XY stage responsible for laser light irradiation is not switched;

FIG. 31 is a diagram illustrating movement control on a laser irradiation point of the rear XY stage in a rear-stage coordinate system after the laser irradiation point has been moved to a nozzle coordinate system (0, 0);

FIG. 32 is a diagram illustrating how the XY stages are switched from one to the other at a corner portion at which the XY stage that is responsible for laser light irradiation is switched;

FIG. 33 is a diagram illustrating a laser light irradiation position, a cooling air blowing position, and a movement position of a discharge module in a case where switching control between laser irradiation and air-cooling by the XY stages is not needed;

FIG. 34 is a diagram illustrating the laser light irradiation position, the cooling air blowing position, and the movement position of the discharge module in a case where switching control between laser irradiation and air-cooling by the XY stages is needed;

FIG. 35 is a diagram illustrating an example in which modification operation is performed using a hot air source according to a first modification;

FIG. 36 is a diagram illustrating an example in which modification operation is performed using a modification module according to a second modification; and

FIG. 37 is a diagram illustrating a tensile specimen modeled by the three-dimensional modeling device.

The accompanying drawings are intended to depict exemplary embodiments of the present invention and should not be interpreted to limit the scope thereof. Identical or similar reference numerals designate identical or similar components throughout the various drawings.

DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

Embodiments of a three-dimensional modeling device will be described below with reference to the accompanying drawings. The present invention is not limited by the embodiments below.

Embodiment

As one example, a three-dimensional modeling device according to an embodiment models a three-dimensional modeled object by fused filament fabrication (FFF). The three-dimensional modeling device may model a three-dimensional modeled object by a modeling method other than FFF.

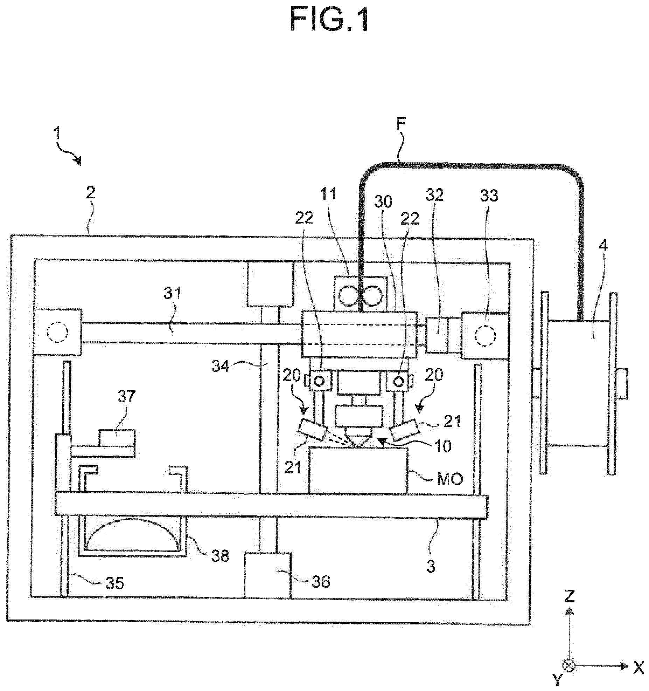

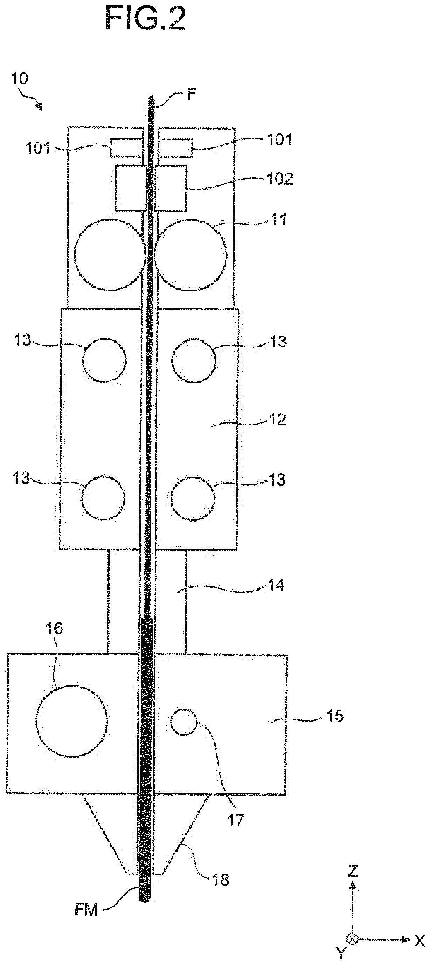

FIG. 1 and FIG. 2 are diagrams illustrating a configuration of the three-dimensional modeling device according to the embodiment. FIG. 1 is a diagram illustrating a configuration example of the three-dimensional modeling device. FIG. 2 is a cross-sectional view illustrating a configuration of a discharge module 10 illustrated in FIG. 1. In the following, an exemplary case will be described in which a model material is used as a modeling material of a three-dimensional modeled object, for simplicity of explanation. In some cases, the three-dimensional modeled object may be modeled by using the model material and a support material. In general, the support material is a different material from the model material that constitutes the three-dimensional modeled object. A support part that is modeled using the support material is eventually removed from a model part that is modeled using the model material. Therefore, in the following, a configuration using the model material and the support material will be appropriately described if needed.

First, a configuration of the three-dimensional modeling device will be described with reference to FIG. 1 and FIG. 2. An inside of a housing 2 in a three-dimensional modeling device 1 is used as a processing space for modeling a three-dimensional modeled object MO. A modeling table 3 as a bed (modeling platform) for modeling is arranged inside the housing 2, and the three-dimensional modeled object MO is modeled by depositing layers one on top of another on the modeling table 3.

In the modeling, an elongated filament F made of a resin composite composed of a thermoplastic resin matrix may be used as the modeling material. The filament F is a solid material in an elongated wire form and is set in the state of being wound around a reel 4 that is arranged outside the housing 2. The reel 4 rotates without generating a large resistance force by being driven along with rotation of an extruder 11 that is a driving unit of the filament F.

The discharge module 10 (one example of a "discharger") that discharges the modeling material is arranged above the modeling table 3 inside the housing 2. The discharge module 10 includes two discharge nozzles. A first discharge nozzle melts and discharges a filament of the model material that constitutes the three-dimensional modeled object MO, and a second discharge nozzle melts and discharges a filament of the support material that supports the model material. In FIG. 1, the first discharge nozzle is arranged on a front side and the second discharge nozzle is arranged on a rear side. The number of the discharge nozzles is not limited to two and may be determined arbitrarily.

Configurations of the first discharge nozzle and the second discharge nozzle can be described in the same manner. Therefore, the configuration of the first discharge nozzle will be described below for simplicity of explanation. The second discharge nozzle will be appropriately described with reference to the drawings if needed.

As illustrated in FIG. 2, the discharge module 10 modularized into the extruder 11, a cooling block 12, a filament guide 14, a heating block 15, a discharge nozzle 18, imaging modules 101, a torsional rotation mechanism 102, and other components. The filament F is pulled-in by the extruder 11 and sequentially fed to the discharge module 10.

The imaging modules 101 capture an omnidirectional image (360-degree image) of a passed portion of the filament F that is pulled into the discharge module 10. The imaging modules 101 are, for example, cameras each including an image forming optical system, such as a lens, and an imaging element, such as a charge coupled device (CCD) sensor or a complementary metal oxide semiconductor (CMOS) sensor. In the example illustrated in FIG. 2, the discharge module 10 includes the two imaging modules 101, but it may be possible to cause the single imaging module 101 to capture a 360-degree image of the filament F by using a reflector, for example.

The torsional rotation mechanism 102 is constituted by a roller and causes the filament F pulled into the discharge module 10 to rotate in a width direction to thereby regulate the direction of the filament F. The heating block 15 includes a heat source 16, such as a heater, and a thermocouple 17 for controlling temperature of the heat source 16, and heats and melts the filament F that is fed to the heating block 15. After performing heating and melting, the heating block 15 feeds a filament FM as the modeling material to the discharge nozzle 18.

The cooling block 12 is arranged above the heating block 15. The cooling block 12 includes cooling sources 13 and prevents back-flow of the melted filament FM into an upper part of the discharge module 10, an increase in resistance to push out the filament F, or clogging of a transfer path due to solidification of the filament FM. The filament guide 14 is arranged between the heating block 15 and the cooling block 12.

The discharge module 10 is held so as to be able to move in an X-axis direction and a Y-axis direction of an XY plane of the three-axis Cartesian coordinate system (XYZ Cartesian coordinate system) inside the housing. Specifically, the discharge module 10 is connected to an X-axis drive shaft 31, which is extended between two facing side surfaces of the housing 2 (a drive shaft extending in the X-axis direction in FIG. 1), and held by a carriage 30. The carriage 30 includes a connection portion that moves in a sliding manner in the X-axis direction along with rotation of the X-axis drive shaft 31. The X-axis drive shaft 31 is rotated by a drive force of an X-axis drive motor 32, so that the discharge module 10 moves in a positive or negative direction along the X-axis in an integrated manner with the carriage 30.

Further, the X-axis drive shaft 31 and the X-axis drive motor 32 are held on a Y-axis drive shaft, which is extended in the Y-axis direction along the two side surfaces of the housing 2 (a drive shaft extending in the Y-axis direction in FIG. 1), so as to be able to move in a same sliding manner. Therefore, the discharge module 10 moves in a positive or negative direction along the Y-axis in an integrated manner with the X-axis drive shaft 31, the carriage 30, and the like, with the aid of a drive force of a Y-axis drive motor 33.

The modeling table 3 is pierced through by a Z-axis drive shaft 34 (a drive shaft extending in a Z-axis direction in FIG. 1) and a guide shaft 35, and held on the Z-axis drive shaft 34 so as to be able to move up and down. The modeling table 3 moves up and down with the aid of a drive force of a Z-axis drive motor 36. The modeling table 3 may include a heater that heats a deposited modeled object. A configuration of a mover that realizes movement in the X-axis direction, the Y-axis direction, and the Z-axis direction as described above is one example of a "first mover". In this example, a configuration in which the discharge module 10 moves in the X-axis direction and the Y-axis direction and the modeling table 3 moves up and down in the Z-axis direction is illustrated, but the "first mover" is not limited to this configuration, and any configuration that enables the discharge module 10 and the modeling table 3 to move relative to each other is applicable.

As illustrated in FIG. 1 and FIG. 2, the discharge nozzle 18 that discharges the filament FM as the modeling material is arranged in a lower end portion of the discharge module 10. The discharge nozzle 18 linearly discharges, in a push-out manner, the filament FM that is fed from the heating block 15 and that is in a melted state or a semi-melted state onto the modeling table 3. The discharged filament FM is cooled and solidified, so that a single layer of the three-dimensional modeled object MO is formed. After forming the layer, the discharge nozzle 18 repeats operation of linearly discharging, in a push-out manner, the melted or semi-melted filament FM onto the formed layer, so that new layers are sequentially deposited one on top of another. Consequently, the three-dimensional modeled object MO is obtained.

Modification modules 20 modify a lower layer below a layer being formed by the discharge module 10. Here, modification means re-softening of a solidified lower layer. In this example, modifiers apply light to and reheat a target position in a layer (lower layer) just below the layer being modeled, in particular, a region in which the filament FM is to be immediately discharged, while the discharge module 10 is modeling an upper layer. The reheating means reheating that is to be performed after the melted filament FM is cooled and solidified. Reheating temperature is not specifically limited, but is preferably set to be equal to or higher than temperature at which the filament FM of the lower layer is melted (re-melted). By reheating a surface of the lower layer, a temperature difference between the reheated layer and the filament FM discharged onto the surface of the reheated layer is reduced, so that the lower layer and the discharged filament FM are mixed and adhesiveness in a deposition direction can be improved.

As the modifiers, for example, light irradiators using laser are appropriate, and, as one example, a case is illustrated in which laser light sources 21 that emit laser are arranged. As one example, semiconductor lasers may be adopted as the laser light sources 21. A laser irradiation wavelength may be set to 445 nanometers (nm) or the like. The laser light sources and the irradiation wavelength are described by way of example only and not limited thereto.

The modifiers may be replaced with any devices that apply something, such as heat, other than light. Further, the modifiers may be replaced with any devices that are able to perform modification depending on types of the modeling material.

The modification modules 20 are arranged in the vicinity of the discharge module 10 by being supported by the carriage 30, for example. The modification modules 20 move on the XY plane together with the discharge module 10 while maintaining certain placements relative to the discharge module 10. Further, the modification modules 20 include movers that move the positions thereof relative to the discharge module 10. The movers are one example of a "second mover" and the "mover". The movers perform movement in the XY directions relative to the discharge module 10 in accordance with a modeling direction (a traveling direction during modeling) of the discharge module 10.

Therefore, the discharge module 10 moves to each of positions on the XY plane while being held by the carriage 30, by being driven by the X-axis drive motor 32 and the Y-axis drive motor 33. The modification modules 20 move together with the discharge module 10 while being held by the carriage 30, and are also able to move in the XY directions relative to the discharge module 10 by being controlled by the movers independently of the movement of the carriage 30. A configuration of the above-described movers will be described in detail later with reference to the drawings.

Meanwhile, if the filament is continuously melted and discharged over time, a peripheral portion of the discharge nozzle 18 may get dirty with the melted resin. To cope with this, by periodically causing a cleaning brush 37 mounted on the three-dimensional modeling device 1 to perform cleaning operation on the peripheral portion of the discharge nozzle 18, it is possible to prevent resin from adhering to a leading end of the discharge nozzle 18. In particular, from the standpoint of preventing adhesion, it is more preferable to perform the cleaning operation before temperature of the resin is not fully reduced. In this case, it is preferable that the cleaning brush 37 is made of a heat resistant material. Polishing powder generated during the cleaning operation may be collected in a trash can 38 mounted in the three-dimensional modeling device 1 and may be periodically thrown away, or it may be possible to arrange a suction path and discharge the powder to the outside.

Modification Modules

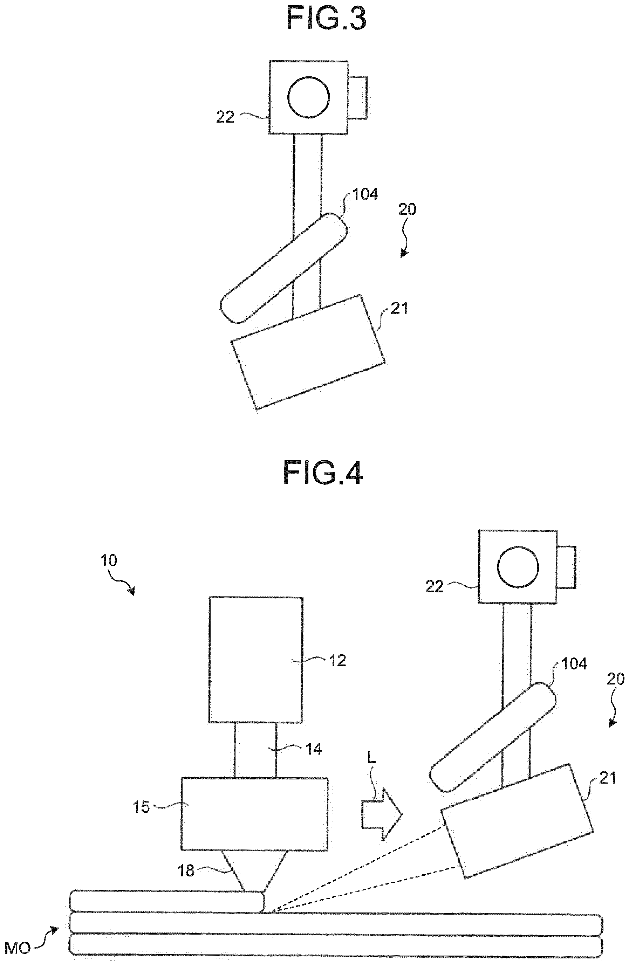

FIG. 3 is a diagram illustrating a configuration example of one of the modification modules 20. The two modification modules 20 (the first modification module 20 and the second modification module 20) illustrated in FIG. 1 have the same configurations except that they are mounted on the carriage 30 in different orientations. The modification modules 20 are able to move independently of each other. FIG. 3 schematically illustrates the configuration of one of the modification modules 20.

As illustrated in FIG. 3, the modification module 20 includes the laser light source 21 that is one example of the modifier, and, in this example, further includes a temperature sensor 104 that measures temperature of a region to be irradiated by the laser light source 21. The temperature sensor 104 is one example of a "measurer". Further, an XY stage 22 is included as the mover as described above. The laser light source 21 and the temperature sensor 104 are fixed to a supporting member in predetermined orientations, and the supporting member is fixed to the XY stage 22. The XY stage 22 is fixed to the carriage 30 that holds the discharge module 10.

FIG. 4 is a diagram for explaining a mounting angle of the laser light source 21. FIG. 4 illustrates a state in which the discharge module 10 is pushing the melted filament FM out of the discharge nozzle 18 to form a third layer of the three-dimensional modeled object MO. An arrow L illustrated in FIG. 4 indicates the modeling direction (traveling direction) of the discharge module 10. The modification module 20 moves in the modeling direction L together with the discharge module 10 along with movement of the carriage 30. The laser light source 21 of the modification module 20 is fixed to the supporting member such that an irradiation direction is inclined toward the lower layer (a second layer in this example). The laser light source 21 is moved by the XY stage 22 along a movement path in which the orientation of the laser light source 21 is maintained with respect to the XYZ Cartesian coordinate system (the orientation and the movement path will be described later) while being fixed to the supporting member. In this example, movement is performed by the XY stage 22 to a position (region) at which the filament FM is to be discharged from the discharge nozzle 18, and a lower layer region in which the filament FM is to be immediately pushed out from the discharge nozzle 18 is re-heated and modified by laser irradiation as indicated by a dashed line in FIG. 4.

The temperature sensor 104 senses temperature of the lower layer before heating. A position of the temperature sensor 104 is located at an arbitrary position at which it is possible to sense a surface of the lower layer before heating (not limited to a position to be immediately heated). The temperature sensor 104 senses the temperature of the lower layer before heating, an output power of laser to be emitted by the laser light source 21 is adjusted on the basis of a result of the sensing, and the lower layer is re-heated to predetermined temperature or higher. As another method, it may be possible to cause the temperature sensor 104 to sense the temperature of the lower layer being re-heated and continue to input thermal energy to the lower layer by using laser until the result of the sensing reaches predetermined temperature or higher. In this case, the position of the temperature sensor 104 is located at an arbitrary position at which it is possible to sense a heated surface. As the temperature sensor 104, arbitrary contact or noncontact temperature devices may be used. For example, a device including a thermocouple may be used.

FIG. 3 illustrates the configuration in which the temperature sensor 104 is fixed to the supporting member and moved in the XY plane together with the laser light source 21, but embodiments are not limited to this example. The temperature sensor 104 may be arranged on the modeling table 3 or the housing 2 side.

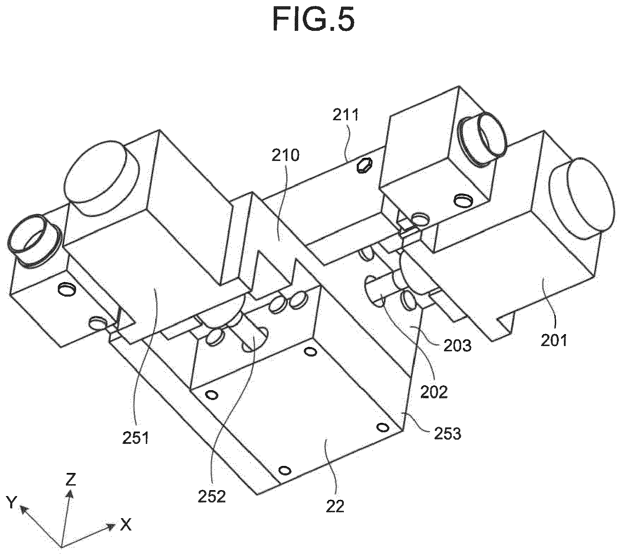

FIG. 5 is a diagram illustrating a configuration example of the XY stage 22. FIG. 5 illustrates a perspective view of the XY stage 22 illustrated in FIG. 4 when viewed from below. The XY stage 22 illustrated in FIG. 5 moves in the X-axis direction by drive of an X-axis drive motor 201 and moves in the Y-axis direction by drive of a Y-axis drive motor 251. In this example, a conversion unit 203 that converts rotational motion to linear motion is connected to an output shaft 202 of the X-axis drive motor 201. A fixing member 210 is fixed to the conversion unit 203, and a mover (the Y-axis drive motor 251 and a conversion unit 253) for movement in the Y-axis direction is mounted on the fixing member 210.

If the output shaft 202 of the X-axis drive motor 201 rotates, the conversion unit 203 and the fixing member 210 move in a positive or negative direction along the X-axis while being guided by a sliding member 211.

The Y-axis drive motor 251 and the conversion unit 253 are connected by an output shaft 252 of the Y-axis drive motor 251. The conversion unit 253 is a conversion unit that convers rotational motion to linear motion. The conversion unit 253 is held by the fixing member 210 in a slidable manner. If the output shaft 252 of the Y-axis drive motor 251 rotates, the conversion unit 253 moves in a positive or negative direction along the Y-axis while being guided by the fixing member 210. By controlling the drive of the X-axis drive motor 201 and the Y-axis drive motor 251 as described above, the XY stage (movable stage part) 22 moves in the X-axis direction and the Y-axis direction. The laser light source 21 and the supporting member of the temperature sensor 104 are mounted vertically (in the Z-axis direction) with respect to a plane of the movable stage part.

Hardware Configuration

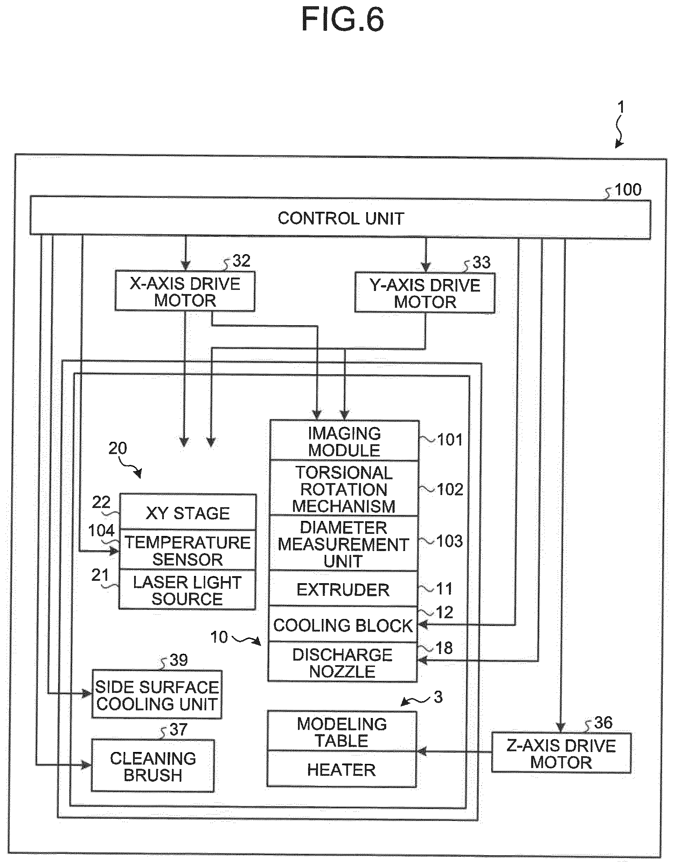

FIG. 6 is a diagram illustrating a hardware configuration example of the three-dimensional modeling device. The three-dimensional modeling device 1 includes a control unit 100. The control unit 100 is constituted by a computer configuration including a central processing unit (CPU) or the like or by a circuit, and is electrically connected to each of units illustrated in FIG. 6. The control unit 100 comprehensively controls each of the units in a modeling process by outputting a control signal to each of the units and receiving a signal from each of the units.

Hereinafter, explanation of the components that have already been explained above will be appropriately omitted, and components that are not yet explained will be described.

The control unit 100 controls drive of the X-axis drive motor 32 on the basis of a detection result obtained from an X-axis coordinate detection mechanism that detects a position of the discharge module 10 in the X-axis direction. With this control, the carriage 30 (including the discharge module 10 and the modification module 20) is moved in the X-axis direction, so that the discharge module 10 is moved to a target position in the X-axis direction. Further, the control unit 100 controls drive of the Y-axis drive motor 33 on the basis of a detection result obtained from a Y-axis coordinate detection mechanism that detects a position of the discharge module 10 in the Y-axis direction. With this control, the carriage 30 (including the discharge module 10 and the modification module 20) is moved in the Y-axis direction, so that the discharge module 10 is moved to a target position in the Y-axis direction. Furthermore, the control unit 100 controls drive of the Z-axis drive motor 36 on the basis of a detection result obtained from a Z-axis coordinate detection mechanism that detects a position of the modeling table 3 in the Z-axis direction, so that the modeling table 3 is moved to a target position in the Z-axis direction.

Namely, the control unit 100 moves the discharge module 10 to a target three-dimensional position relative to the modeling table 3 by controlling movement of the discharge module 10 in the XY plane and up-down movement of the modeling table 3 in the Z-axis direction.

When moving the discharge module 10 to the target three-dimensional position, the control unit 100 appropriately moves the modification module 20 in advance by moving the XY stage 22 in accordance with the moving direction of the discharge module 10 that is to be moved to a next target three-dimensional position, on the basis of information indicating a modeling direction obtained from modeling data. The control unit 100 moves the modification module 20 by driving a drive motor (the X-axis drive motor 201 and the Y-axis drive motor 251) of the XY stage 22 independently of the X-axis drive motor 32 and the Y-axis drive motor 33. For example, the drive of the X-axis drive motor 201 is controlled on the basis of a detection result obtained from an X-axis coordinate detection mechanism that detects a position of the XY stage 22 in the X-axis direction, and the drive of the Y-axis drive motor 251 is controlled on the basis of a detection result obtained from a Y-axis coordinate detection mechanism that detects a position of the XY stage 22 in the Y-axis direction.

Further, the control unit 100 acquires the temperature of the lower layer from the temperature sensor 104, and controls an output power of laser emitted from the laser light source 21 on the basis of the acquired temperature.

Furthermore, the control unit 100 causes the discharge nozzle 18 to discharge the modeling material on the basis of the modeling data.

A diameter measurement unit 103 measures, as diameters, widths between edges of the filament F in two directions along the X-axis and the Y-axis from an image of the filament captured by the imaging module 101, and if detecting a diameter out of standard, outputs error information. An output destination of the error information may be a display, a speaker, or any other device. The diameter measurement unit 103 may be a circuit or a function that is implemented by a process performed by the CPU.

Other main components have already been described above, and therefore, explanation thereof will not be repeated.

Movement Paths of Modification Modules

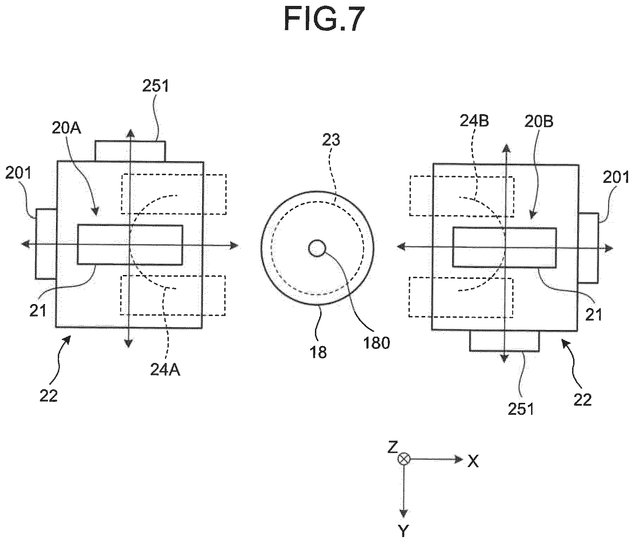

FIG. 7 to FIG. 9 are diagrams for explaining the movement paths of the modification modules at the time of the modeling process. In comes cases, the "movement paths" may be referred to as "trajectories". FIG. 7 is a diagram for explaining moving ranges in which the modification modules 20 move. FIG. 7 is a planar view of an upper part in which the discharge module 10 is located (the positive Z-axis side in FIG. 1) relative to the modeling table 3 side. In this figure, only the discharge nozzle 18 is illustrated as the discharge module 10 and other components are not illustrated for simplicity of explanation.

As illustrated in FIG. 7, the two modification modules 20 are arranged for the single discharge nozzle 18. In FIG. 7, a first modification module is denoted by "20A" and a second modification module is denoted by "20B" to distinguish the modification modules 20 from each other.

A curve (a circle in this example) 23 around a discharge position 180 of the discharge nozzle 18 represents irradiation positions (modification positions) to which the laser light source 21 is moved in advance and at which irradiation is performed in the traveling direction when the discharge nozzle 18 (i.e., the discharge module 10) travels in arbitrary directions in the XY plane, and all of points corresponding to travel in all directions are collectively represented by the circle. A radius of the circle 23 is set to, as one example, 2 millimeters (mm). As illustrated in FIG. 7, the XY stage 22 of the first modification module 20A is controlled in the XY directions so as to be located on a circular arc (a circular arc with a radius of 2 mm in this example) 24A that has the same curve as that of a semicircular arc of the circle 23 on the left side. Therefore, it is possible to irradiate arbitrary points (and a neighboring region) on the semicircular arc of the circle 23 on the left side by only moving the XY stage 22 of the first modification module 20A in the XY directions. Further, as illustrated in FIG. 7, the XY stage 22 of the second modification module 20B is controlled in the XY directions so as to be located on a circular arc (a circular arc with a radius of 2 mm) that has the same curve as that of a semicircular arc of the circle 23 on the right side. Therefore, it is possible to irradiate arbitrary points (and a neighboring region) on the semicircular arc of the circle 23 on the right side by only moving the XY stage 22 of the second modification module 20B in the XY directions.

Meanwhile, the above-described example illustrates a configuration that is adopted when modeling is performed by moving the discharge nozzle 18 (i.e., the discharge module 10) in arbitrary directions (all directions). Embodiments are not limited to this example if modeling is performed by limiting the moving direction of the discharge nozzle 18 (i.e., the discharge module 10). For example, if modeling is performed only when the discharge nozzle 18 (i.e., the discharge module 10) is moved in a direction toward the semicircular arc of the circle 23 on the left side, it may be possible to arrange only the single modification module 20 (in this example, the first modification module 20A) for the single discharge nozzle 18.

Further, while the two modification modules 20 are arranged for the semicircular arc on the left side and the semicircular arc on the right side of the circle 23, if the circle 23 is further divided by, for example, 120 degrees or the like, it may be possible to arrange corresponding modification modules (i.e., three or more modification modules) for the respective parts.

In this example, the modification modules 20 irradiate a position that is 2 mm ahead of a discharging position, in advance of movement of the discharge nozzle 18. Specifically, the laser light source 21 is moved in advance by the XY stage 22 along a movement path in which an irradiation orientation of the laser light source 21 is maintained in a predetermined orientation with respect to the XYZ Cartesian coordinate system, and emits laser in the predetermined orientation at an ahead position.

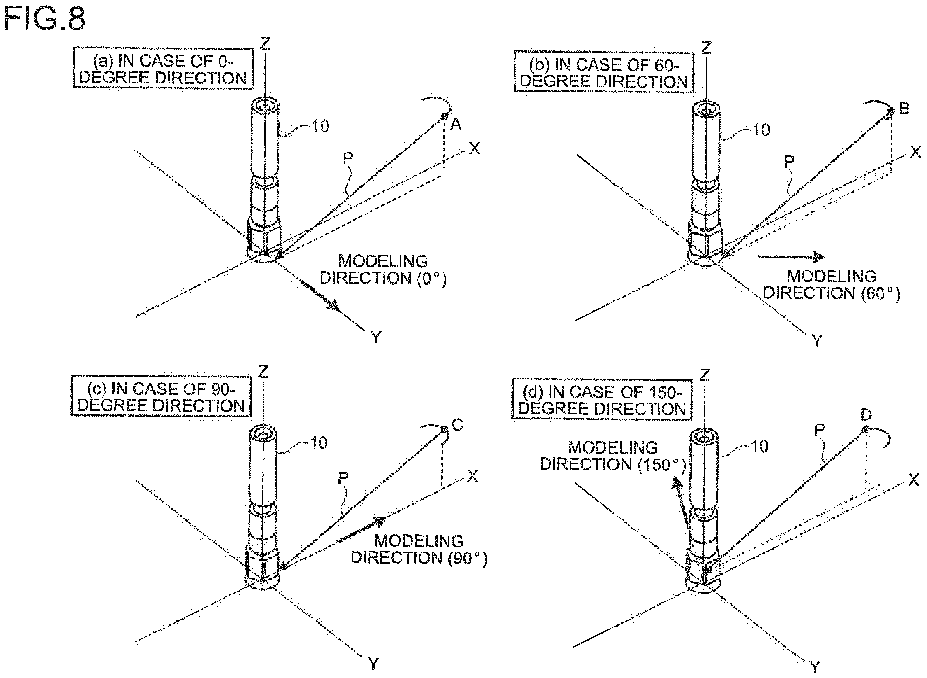

FIG. 8 is a schematic diagram illustrating how the modification module 20 moves in accordance with the modeling direction of the discharge nozzle 18. FIG. 8 illustrates the modeling direction of the discharge module 10 when the modeling table 3 is viewed obliquely from above, and a position of the laser light source 21 of the single modification module 20 corresponding to the modeling direction. Meanwhile, the laser light source 21 moves along with movement of the XY stage 22 without changing the irradiation orientation. Therefore, a trajectory on which the laser light source 21 moves is the same as a trajectory (the circular arc 24A or a circular arc 24B) along which the XY stage 22 moves.

As one example, a case will be described in which modeling is performed by causing the discharge nozzle 18 to travel in a direction toward the semicircular arc of the circle 23 on the left side in FIG. 7. In this example, a positive Y-axis direction in FIG. 7 is defined as 0 degree, and positions of the laser light source 21 in a case where the modeling direction of the discharge nozzle 18 is changed by 0 degree, 60 degrees, 90 degrees, and 150 degrees in a counterclockwise direction are illustrated. A trajectory (a circular arc illustrated in FIG. 8) on which the laser light source 21 moves from points A to D is the same as the circular arc 24B.

In each of figures, at least a single layer is formed on the modeling table 3, and the discharge module 10 moves above the formed layer in the modeling direction L while pushing out the filament FM, so that modeling is performed. Here, it is assumed that a height from a top surface of the layer to the lower end of the discharge module 10 (a discharge surface of the discharge nozzle) is adjusted to be approximately constant by moving the modeling table 3 up and down. In each of the figures in FIG. 8, an orientation of an optical axis of irradiation light is indicated by an arrow P to clarify an irradiation position of the laser light source 21 in each of patterns.

If the modeling direction of the discharge module 10 is a 0-degree direction (see (a) in FIG. 8), the laser light source 21 is located at the point A on the trajectory. If the modeling direction of the discharge module 10 is changed to a 60-degree direction (see (b) in FIG. 8), the laser light source 21 moves to the point B along the trajectory. If the modeling direction of the discharge module 10 is changed to a 90-degree direction (see (c) in FIG. 8), the laser light source 21 moves to the point C along the trajectory. If the modeling direction of the discharge module 10 is changed to a 150-degree direction (see (d) in FIG. 8), the laser light source 21 moves to the point D along the trajectory. While the movement of the laser light source 21 in a case where the modeling direction of the discharge nozzle 18 is changed by 0 degree, 60 degrees, 90 degrees, and 150 degrees in the counterclockwise direction has been described above, if the modeling direction is changed in a clockwise direction, the laser light source 21 moves to the point D, the point C, the point B, and the point A in this order along the trajectory.

As described above, the laser light source 21 is moved, by drive of the two shafts, on the XY stage 22 side along the trajectory that has the same curve as the circle 23, and stops at a coordinate of a movement destination on the circumference of the circle. With this configuration, even if the modeling direction of the discharge nozzle 18 is changed to other directions, the laser light source 21 can be immediately moved in advance to a position at which the filament FM is to be discharged by the discharge nozzle 18, and can modify the lower layer with laser light.

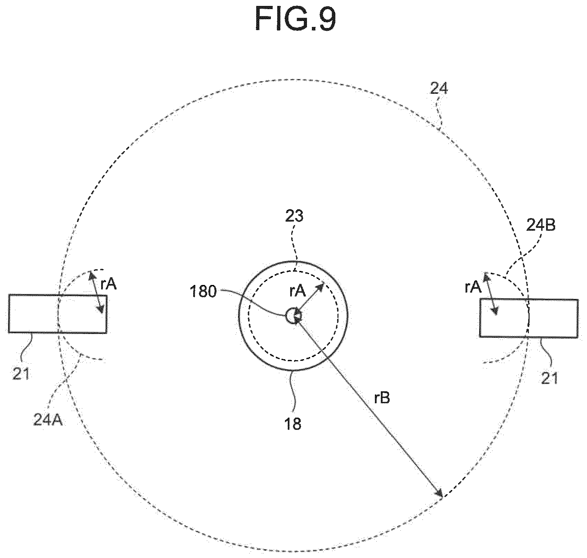

FIG. 9 is a diagram for explaining a difference in effects between when the modification modules 20 are moved by the XY stages 22 as described above and when the modification modules 20 are moved by a rotary table having a different configuration, as one example.

In FIG. 9, rB represents a radius of the trajectories of the laser light sources 21 when the laser light sources 21 are moved by the rotary table, and rA represents a radius of the trajectories of the laser light sources 21 when the laser light sources 21 are moved by the XY stages 22. Here, the radius rA is equal to a radius of the circle 23 that represents positions in all directions to be irradiated by the laser light sources 21. When the laser light sources 21 are moved by the rotary table, the trajectories of the laser light sources 21 become larger than the radius of the circle 23. That is, rA < rB.

As one example, movement amounts of the two laser light sources 21 are obtained by assuming that rA = 2 [mm] and rB = 40[mm]. Movement amounts 1A and 1B in cases where the XY stage 22 and the rotary table are respectively used are calculated as follows.

$$1A = 2 \times rA \times \Pi = 12.6 \ [\text{mm}]$$

$$1B = 2 \times rB \times \Pi = 251.2 \ [\text{mm}]$$

According to calculation results of this example, it can be found that the XY stages 22 are able to move, in advance, the laser light sources 21 by only one-twentieth of a moving amount that is needed when the rotary table is used. That is, the movement of the laser light sources 21 can be reduced. Further, according to the moving ranges of the laser light sources 21 as illustrated in FIG. 9, it can be found that a space corresponding to the radius rb is needed when the rotary table is used, but a smaller space is satisfactory when the XY stages 22 are used.

Configuration of Modification Modules shared by First Discharge Nozzle and Second Discharge Nozzle

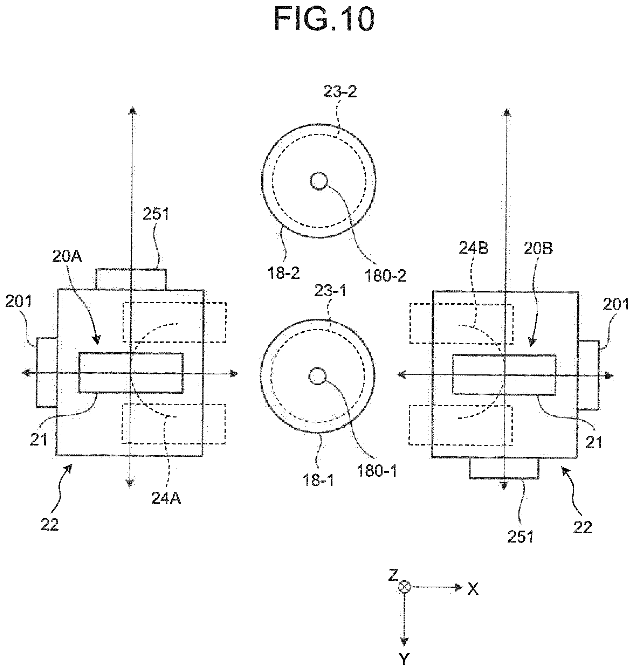

FIG. 10 is a diagram illustrating an example in which the identical modification modules 20 are combined with the first discharge nozzle that discharges the model material and the second discharge nozzle that discharges the support material. FIG. 10 illustrates an example in which the identical modification modules (the modification modules 20A and 20B) are arranged on both sides of the discharge nozzles (a first discharge nozzle 18-1 and a second discharge nozzle 18-2).

The modification modules (the modification modules 20A and 20B) on both sides as illustrated in FIG. 10 are designed so as to have large moving ranges in the Y-axis direction such that both of circles (a first circle 23-1 and a second circle 23-2) of the two discharge modules (the first discharge nozzle 18-1 and the second discharge nozzle 18-2) can be irradiated with laser. If the first discharge nozzle 18-1 first discharges the model material and thereafter the second discharge nozzle 18-2 discharges the support material, each of the modification modules (the modification modules 20A and 20B) is moved in only the negative Y-axis direction by driving the XY stages 22. With this configuration, movement from a control range of the first circle 23-1 to a control range of the second circle 23-2 is performed. Then, the XY stages 22 are controlled in the XY directions along the circular arc 24A or the circular arc 24B as described above within the control range of the second circle 23-2.

Further, if the second discharge nozzle 18-2 first discharges the support material and thereafter the first discharge nozzle 18-1 discharges the model material, control is performed in an opposite manner. Specifically, each of the modification modules (the modification modules 20A and 20B) is moved in only the positive Y-axis direction by driving the XY stages 22. With this configuration, movement from the control range of the second circle 23-2 to the control range of the first circle 23-1 is performed. Then, the XY stages 22 are controlled in the XY directions along the circular arc 24A or the circular arc 24B as described above within the control range of the first circle 23-1.

A configuration in which the corresponding modification module 20 is arranged for each of the discharge modules (the first discharge nozzle 18-1 and the second discharge nozzle 18-2) is clarified in the description above, and therefore, explanation thereof will be omitted.

Modeling Method

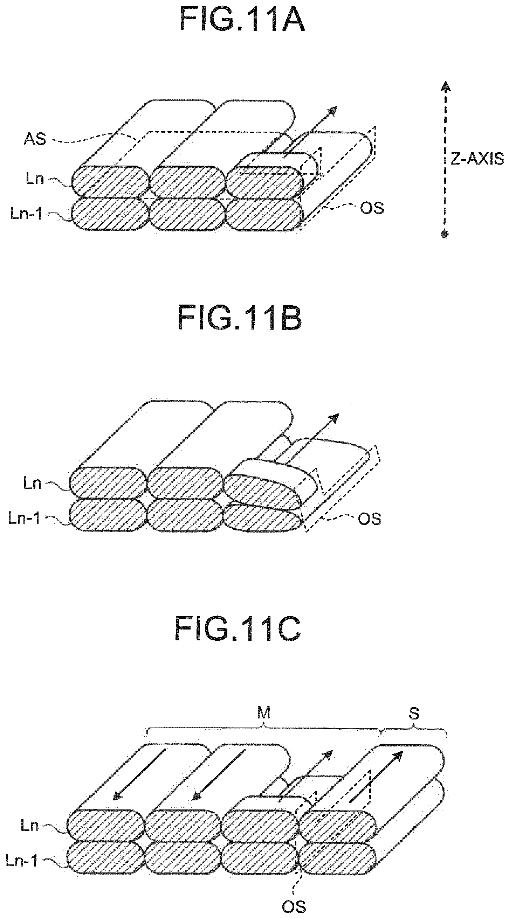

A modeling method implemented by the three-dimensional modeling device 1 will be described below. FIGS. 11A to 11C are schematic diagrams illustrating a state of a modeled object at the time of forming an upper layer. Hereinafter, a layer being modeled by the discharge module 10 will be referred to as an upper layer Ln, a layer just below the layer being modeled will be referred to as a lower layer Ln-1, and a layer just below the lower layer Ln-1 will be referred to as a lower layer Ln-2. Solid arrows in FIG. 11A to FIG. 14C indicate movement paths (tool paths) of the discharge module 10. In FIG. 11A and subsequent figures, discharged filaments are represented by elliptic cylinders to clarify the tool paths of the discharge module 10. Therefore, spaces are formed between the filaments, but in reality, it is preferable to perform modeling such that the spaces are not formed, from the standpoint of strength.

FIG. 11A is a schematic diagram illustrating the modeled object in a case where the upper layer is formed without re-heating the lower layer. The discharge nozzle 18 moves in a direction indicated by the solid arrow in FIGS. 11A to 11C to form the modeled object. If the upper layer Ln is formed without re-heating the lower layer Ln-1, it is possible to form the upper layer Ln while the lower layer Ln-1 is solidified; therefore, an outer surface OS is not deformed. However, in this case, it is difficult to obtain adequate adhesive strength between the upper layer Ln and the lower layer Ln-1 (an adhesive surface AS).

FIG. 11B is a schematic diagram illustrating the modeled object in a case where the upper layer is formed while re-heating the lower layer. If the upper layer Ln is formed while reheating the lower layer Ln-1, adhesiveness is ensured, but the outer surface OS is deformed because the upper layer Ln is formed while the lower layer Ln-1 is melted.

FIG. 11C is a schematic diagram illustrating the modeled object in a case where the upper layer is formed while re-heating the lower layer. In the example illustrated in FIG. 11C, even if the upper layer Ln is formed while re-heating the lower layer Ln-1 of a model portion M, the outer surface OS of the model portion M is not deformed because the model portion M is supported by a support portion S, and adhesiveness is also ensured.

In the present embodiment, the upper layer Ln is formed while a part of the lower layer Ln-1 is re-melted. With this configuration, polymer entanglement between the upper layer Ln and the lower layer Ln-1 is accelerated, so that strength of the modeled object is improved. Further, by appropriately setting conditions for re-melting, it is possible to simultaneously improve shape accuracy and the strength of the model portion M in the deposition direction.

Meanwhile, the model material and the support material may be the same material or different materials. For example, even if the model portion M and the support portion S are made of the same material, it is possible to separate these portions from each other after completion of the modeling, by controlling strength of an interface between these portions.

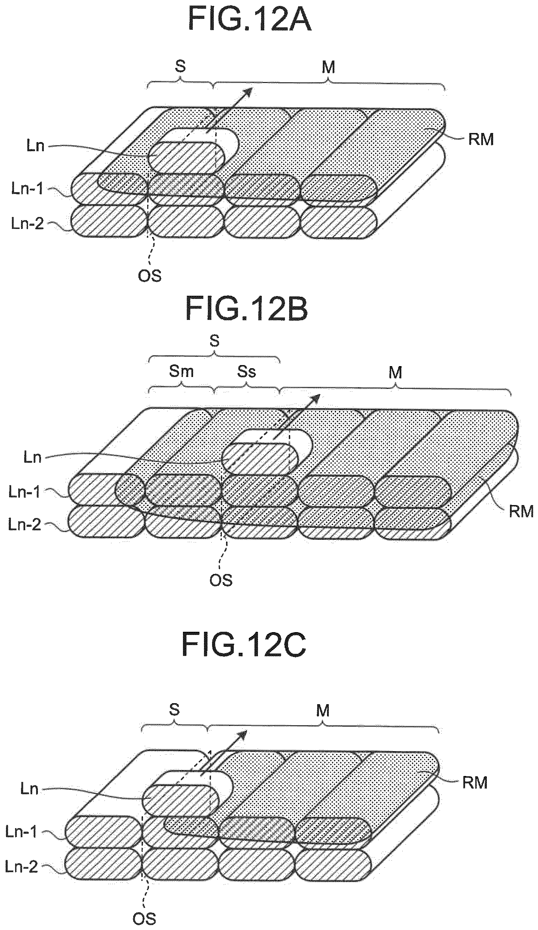

FIGS. 12A to 12C are schematic diagrams illustrating a state of the modeled object at the time of forming the upper layer. In a modeling method as illustrated in FIG. 12A, the three-dimensional modeling device 1 re-heats a surface of the model portion M and a surface of the support portion S except for an outer peripheral portion in the lower layer Ln-1 to form a re-melted portion RM, and then forms the upper layer Ln.

With this method, modeling is performed while re-melting a region on the outer surface OS side in the model portion M, so that adhesiveness between the layers is improved and the strength in the deposition direction is improved. Further, by melting the outer surface OS side, it is possible to prevent the support portion S and the model portion M from being separated from each other during modeling, so that modeling accuracy is improved.

However, if the adhesiveness between the support portion S and the model portion M is excessively increased, releasing property of the support portion S after completion of the modeling may be reduced. Further, the support portion S may be mixed into the model portion M depending on heating temperature, and the strength of the model portion M may be reduced. It may be possible to prevent mixture of the materials by using a method of heating the materials without contacting a surface of a deposited layer, by contriving a way to move a contact member when heating is performed in a contact manner, or by cleaning the contact member.

Furthermore, the releasing property of the support portion S can be improved by using, as the support material, a material that is different from the model material and that has a lower melting point than the model material.

In a modeling method as illustrated in FIG. 12B, the three-dimensional modeling device 1 forms the support portion S by using the model material and the support material. In this example, the three-dimensional modeling device 1 arranges the support material in a region Ss on the model portion M side in the support portion S, and arranges the model material in a region Sm on the outer peripheral side. In this case, the three-dimensional modeling device 1 may perform modeling by first forming the model portion M and the region Sm in the support portion S by using the model material, and by subsequently pouring the support material into a gap between the model materials. Subsequently, the three-dimensional modeling device 1 forms the upper layer Ln while re-heating the surface of the model portion M and the surface of the support portion S except for the outer peripheral portion in the lower layer Ln-1.

The modeling method as illustrated in FIG. 12B is suitable when the support portion S has excellent releasing property. Further, the modeling method as illustrated in FIG. 12B is preferable in that even if shape accuracy and structural strength of the region Ss are low, it is possible to compensate for the shape accuracy and the strength of the region Ss because the region Sm supports the region Ss.

In a modeling method as illustrated in FIG. 12C, the three-dimensional modeling device 1 forms the upper layer Ln while re-heating the surface of the model portion M except for the vicinity of the outer surface OS. With this method, heat of the model portion M is less likely to be transmitted to the support portion S during re-heating, so that the shape of the support portion S can be stabilized. The modeling method illustrated in FIG. 12C is advantageous in that it is easy to maintain the shape of the model portion M and ensure the releasing property of the model portion M and the support portion S; however, as compared to the modeling method in which the entire surface of the model portion M is re-melted, the strength in the deposition direction is reduced. Therefore, the modeling method as illustrated in FIG. 12C is effective when a modeled object with a rigid internal structure is to be modeled or when priority is given to the modeling accuracy and the releasing property.

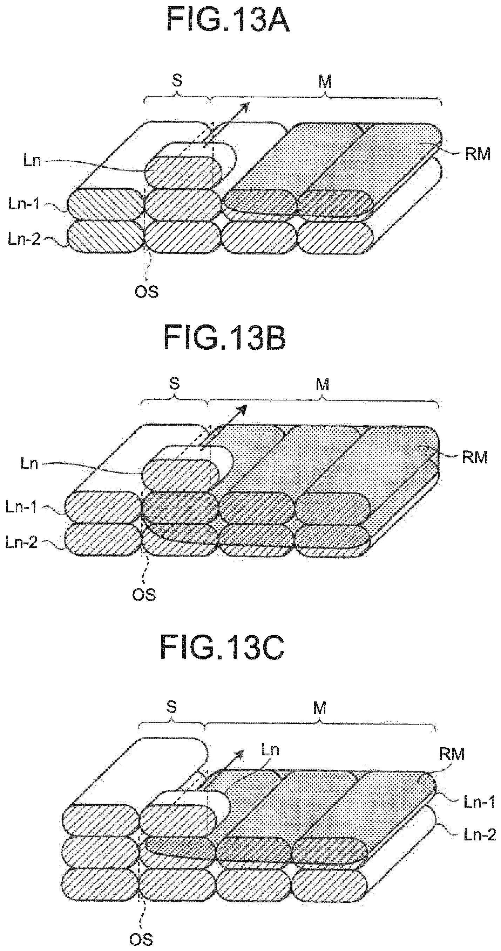

FIGS. 13A to 13C are schematic diagrams illustrating states of the modeled object at the time of forming the upper layer. A modeling method illustrated in FIG. 13A is different from the modeling method illustrated in FIG. 12C in that a non-melted region in the surface of the model portion M is extended to a position located further away from the outer surface OS such that the re-melted portion RM is further reduced. The modeling method illustrated in FIG. 13A is advantageous in that, as compared to the modeling method illustrated in FIG. 12C, the shape of the support portion S is stabilized, so that the shape of the model portion M can be maintained; however, the strength of the model portion M in the deposition direction is reduced.

A modeling method illustrated in FIG. 13B is different from the modeling method illustrated in FIG. 12C in that the surface of the lower layer Ln-1 is re-heated up to near the outer surface OS in the model portion M. The modeling method illustrated in FIG. 13B is effective when the melting point of the support material is higher than that of the model material. According to the modeling method as illustrated in FIG. 13B, as compared to the modeling method illustrated in FIG. 12C, the strength of the model portion M in the deposition direction can be increased.

In a modeling method illustrated in FIG. 13C, the three-dimensional modeling device 1 first forms the support portion S by discharging the support material of the upper layer Ln, and thereafter forms the model portion M of the upper layer Ln while re-heating the model portion M of the lower layer Ln-1. The support portion S is eventually removed after modeling; therefore, it is only necessary for the support portion S to have certain strength that prevents separation during the modeling, and it is not necessary to have the same strength as that of the model material. Therefore, it is preferable to select, as the support material, a material that can be deposited with higher accuracy than the model material. By forming the support portion S of the upper layer Ln while the lower layer Ln-1 is solidified, modeling accuracy of the support portion S can be improved.

According to the modeling method as illustrated in FIG. 13C, the support portion S and the model portion M are formed independently of each other. Therefore, the three-dimensional modeling device 1 is able to reduce a deposition pitch of the support portion S relative to a deposition pitch of the model portion M. For example, in the configuration as illustrated in FIG. 13C, the deposition pitch of the support portion S is a half of the deposition pitch of the model portion M. The melted model material follows the shape of the support portion S, and therefore, by reducing the deposition pitch of the support portion S, the outer surface OS of the model portion M can be further smoothed. The method as illustrated in FIG. 13C is preferable in a case where it is possible to model the support portion S with higher accuracy than the model portion M.

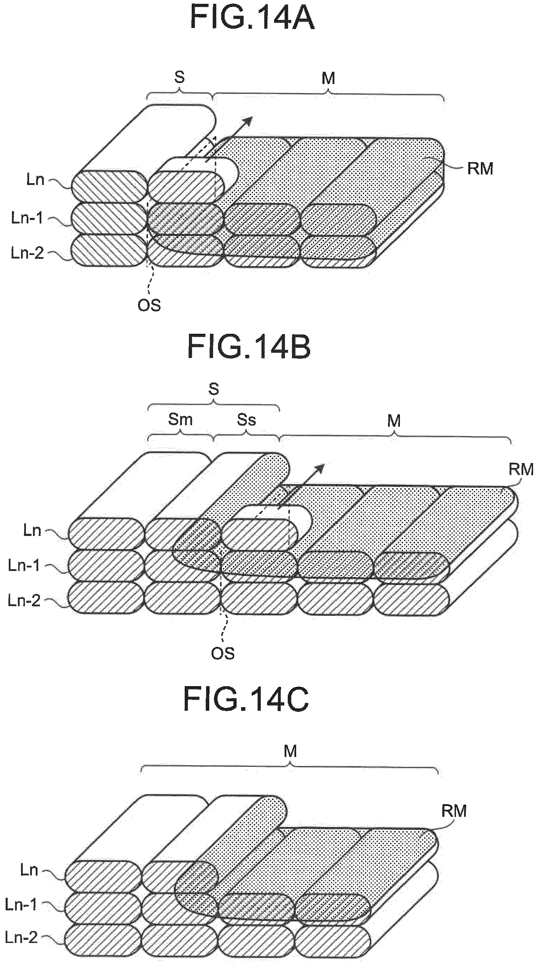

FIGS. 14A to 14C are schematic diagrams illustrating states of the modeled object at the time of forming the upper layer. A modeling method illustrated in FIG. 14A is different from the method illustrated in FIG. 13B in that the support portion S of the upper layer Ln is first formed and thereafter the model portion M of the upper layer Ln is formed. If the melting point of the support material is higher than that of the model material, the support portion S is not melted even when the model portion M is heated up to near the outer surface OS. According to the modeling method as illustrated in FIG. 14A, it is possible to obtain the modeled object with excellent releasing property and high strength in the deposition direction, so that the modeling accuracy can be improved.

A modeling method illustrated in FIG. 14B is different from the method illustrated in FIG. 12B in that the support portion S of the upper layer Ln is first formed and thereafter the model portion M of the upper layer Ln is formed. According to the method illustrated in FIG. 14B, even when the shape accuracy and the structural strength of the region Ss are low, it is possible to compensate for the shape accuracy and the structural strength of the region Ss because the region Sm supports the region Ss. However, according to the modeling method as illustrated in FIG. 14B, if the region Ss is melted at the time of re-melting, the releasing property of the support portion S may be reduced in some cases.

A modeling method illustrated in FIG. 14C is different from the method illustrated in FIG. 13A in that an outer peripheral side of the model portion M of the upper layer Ln is first formed and thereafter a remaining portion of the model portion M of the upper layer is formed. According to the modeling method as illustrated in FIG. 14C, modeling is performed by using only the model portion M, so that the shape is stabilized and the modeling accuracy can be improved. Further, modeling is performed while re-melting a part of a side surface of the model portion M of the upper layer Ln, so that the strength of the model portion M can also be improved.

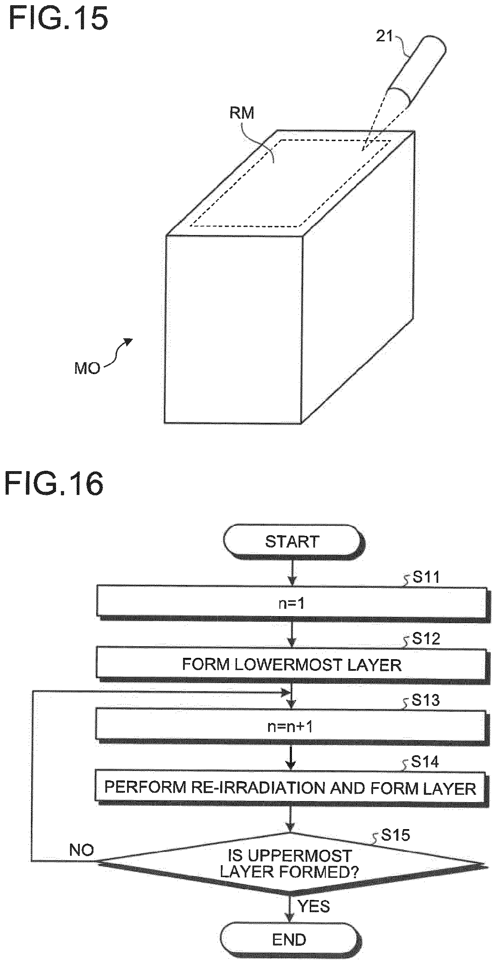

FIG. 15 is a schematic diagram illustrating an example of a reheating range of the modification module 20 (the laser light source 21). For the purpose of maintaining an outer shape, the three-dimensional modeling device 1 may intentionally reduce the re-melted portion RM without re-melting the outer peripheral portion of the three-dimensional modeled object MO, to thereby maintain the shape of the modeled object and improve adhesiveness between the layers. Meanwhile, it may be possible to re-heat the outer peripheral portion. Consequently, it is possible to increase the strength in the reduced region.

Modeling Operation performed by Three-Dimensional Modeling Device

Modeling operation performed by the three-dimensional modeling device 1 will be described below. The control unit 100 of the three-dimensional modeling device 1 receives input of data of a three-dimensional model. The data of the three-dimensional model is constituted by image data of each of layers that are obtained by slicing the three-dimensional model at predetermined intervals. The control unit 100 analyzes the image data and sets a discharge nozzle, a modeling path, and the like on the basis of the modeling method that is designated in advance. Then, the control unit 100 drives the X-axis drive motor 32 or the Y-axis drive motor 33 to move the discharge module 10 in accordance with sequence data, and discharges the melted filament FM onto the modeling table 3 in accordance with the modeling path. In the following, it is assumed that the filament FM is sequentially discharged to a target position from the designated discharge nozzle when the discharge module 10 moves along the modeling path, although this will not be specifically described. Further, it is assumed that a next upper layer is formed by sequentially moving the modeling table 3 downward.

FIG. 16 is a flowchart illustrating an example of the entire modeling operation performed by the three-dimensional modeling device. The control unit 100 of the three-dimensional modeling device 1 first sets a parameter n indicating a layer number to "1" that indicates a first layer (lowermost layer) (Step S11).

Then, the control unit 100 controls each of the units in accordance with the sequence data of the lowermost layer, and forms a layer of a slice image of the lowermost layer on the modeling table 3 (Step S12).

After completing formation of the lowermost layer, the control unit 100 increments the parameter n by one to form a next layer (Step S13).

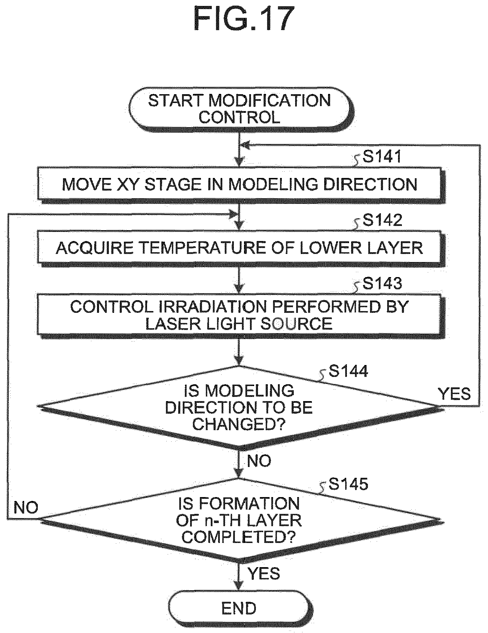

Then, the control unit 100 controls each of the units in accordance with the sequence data of a layer n = n + 1 (n = 2 in this case), and forms a layer of a slice image of the layer n = n + 1 on the lower layer that has been formed on the modeling table 3 (Step S14). When the control unit 100 forms an upper layer (n = 2 or larger), the control unit performs modification control to modify the layer (lower layer) just below the to-be-formed layer. The modification control will be described later with reference to FIG. 17.

After completing formation of the layer n = n + 1, the control unit 100 determines whether the formation of this layer is formation of an outermost surface layer (Step S15). If it is determined that the formation of this layer is not the formation of the outermost surface layer (determined as NO at Step S15), the control unit 100 proceeds to Step S13, and increments the parameter n by one to form a next layer. That is, by repeating the processes from Step S13 to Step S15, layers are deposited one on top of another.

Then, if the formation of the outermost surface layer is completed (determined as Yes at Step S15), the modeling operation is terminated.

FIG. 17 is a flowchart illustrating an example of the modification control performed at Step S14. First, the control unit 100 moves the XY stage 22 in the modeling direction in which a layer is formed, before forming the layer (Step S141). Specifically, the control unit 100 controls the X-axis drive motor 201 and the Y-axis drive motor 251 of the XY stage 22 to move the laser light source 21 in advance such that the laser light source 21 can perform irradiation in the modeling direction.

Subsequently, the control unit 100 causes the temperature sensor 104 that is moved in advance together with the laser light source 21 to sense temperature of a surface of a lower layer (lower layer temperature), and acquires a sensing result (information on the lower layer temperature) (Step S142).

Then, the control unit 100 controls irradiation performed by the laser light source 21 on the basis of the sensing result (Step S143).

Subsequently, the control unit 100 determines whether the modeling direction is to be changed at a next position (Step S144). Whether the modeling direction is to be changed at the next position can be determined by prediction based on the sequence data.

If it is determined that the modeling direction is not to be changed at the next position (determined as No at Step S144), the control unit 100 subsequently determines whether formation of an n-th layer is completed (Step S145). If the formation of the n-th layer is not completed (if it is determined as No at Step S145), the control unit 100 proceeds to Step S142, performs the same control from Step S142, acquires the lower layer temperature at each of positions, and perform irradiation control at an optimal output power.

In contrast, at Step S144, if it is determined that the modeling direction is to be changed at the next position (determined as Yes at Step S144), the process proceeds to Step S141, and the control unit 100 moves the laser light source 21 in advance in a to-be-changed direction such that the laser light source 21 can perform irradiation in the modeling direction.

If the formation of the n-th layer is completed (if it is determined as Yes at Step S145), the control unit 100 terminates the modification control by causing the laser light source 21 to stop irradiation.

Meanwhile, as in the modeling methods as illustrated in FIG. 12C, FIG. 13A, FIG. 13C, and FIG. 14C, the control unit 100 may emit laser to the inside of a range indicated by the image data. Alternatively, as in the modeling methods as illustrated in FIG. 12A, FIG. 12B, and FIG. 14B, the control unit 100 may emit laser beyond the range indicated by the image data. Heating temperature of the lower layer at Step S143 is controlled such that the temperature becomes equal to or higher than melting temperature of the filament.

Movement Control Pattern of Modifier

Examples of a movement control pattern of the modifier corresponding to a switching direction of the discharge module 10 that moves together with the carriage 30 serving as the holding unit will be described below. Modification includes re-melting of a surface of a lower layer to closely attach an upper layer onto the lower layer, re-heating of an outer peripheral portion of a modeled object to increase the strength of the modeled object, cooling to reduce temperature of a surface of the modeled object after discharge, and the like. In the following, movement control patterns for various kinds of modification will be described, but the movement control patterns for various kinds of modification are not limited to these examples. For simplicity of explanation, an example will be described in which a single pair of the discharge nozzle 18 of the discharge module 10 and the laser light source 21 of the modification module 20 that is selected to be subjected to movement control with respect to the discharge nozzle 18 will be described; however, embodiments are not limited thereto. Further, in a case where the plurality of laser light sources 21 are used, the use of the plurality of laser light sources 21 will be clarified in each explanation.

First Movement Control Pattern

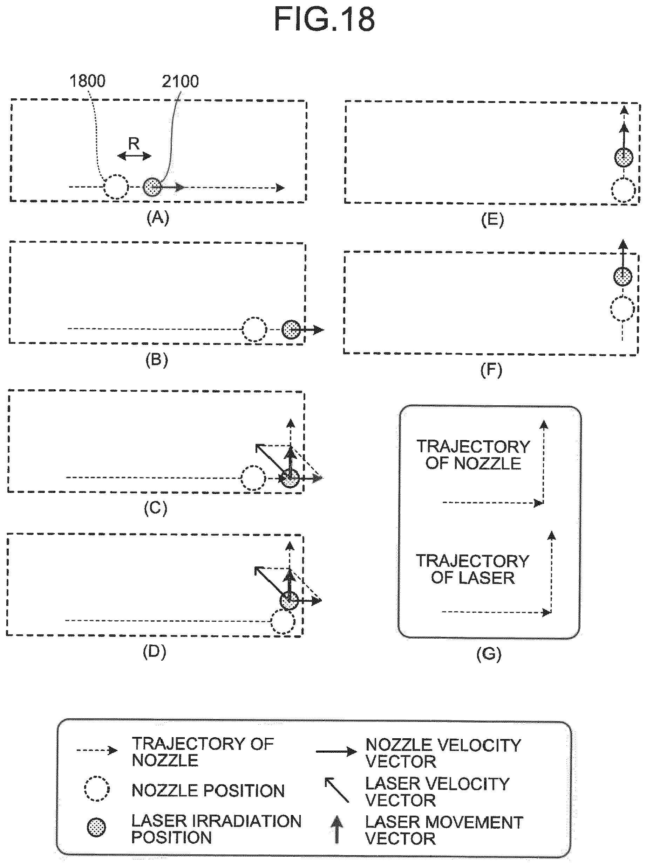

FIG. 18 is a diagram for explaining a first movement control pattern. FIG. 18 illustrates how a rectangular solid as one example of a three-dimensional modeled object is modeled, when viewed from a top surface side. A rectangular dashed line indicates an outer periphery of the rectangular solid. This example is based on the assumption that the discharge nozzle 18 discharges a filament as the modeling material while moving on one side of the rectangular solid (a straight line in a longitudinal direction) in the modeling direction, and a traveling direction (modeling direction) is changed to the 90-degree direction at a corner portion of the rectangular solid.

FIG. 18 illustrates, at (A) to (F), parts of the modeling operation on the rectangular solid, when viewed from an upper side of the rectangular solid. In each of the figures, a position (a discharge position 1800) at which the discharge nozzle 18 discharges the modeling material while moving in the modeling direction and a modification position (laser irradiation position 2100) to be irradiated with laser by the laser light source 21 in advance of operation of the discharge nozzle 18 are schematically illustrated in chronological order. Hereinafter, movement control performed by the carriage 30 to move the discharge module 10 (i.e., the discharge nozzle 18) and movement control performed by the mover to move the laser light source 21 relative to the carriage 30 will be described in chronological order, with reference to the discharge position 1800 of the discharge nozzle 18 and the laser irradiation position 2100 to be irradiated with laser light by the laser light source 21. In the following, it is assumed that the position (nozzle position) of the discharge nozzle 18 and the discharge position 1800 indicate the same position. Further, the same applies to each of the movement control patterns to be described later.

First, the discharge nozzle 18 discharges the filament as the modeling material while moving on a straight line in the longitudinal direction of the outer periphery. The laser light source 21 emits laser light from the discharge position 1800 of the discharge nozzle 18 toward the laser irradiation position 2100 located ahead in the traveling direction (traveling direction on the straight line) of the nozzle ((A) in FIG. 18). In this example, a position located ahead of the discharge position 1800 by a distance R is designated as the laser irradiation position. Here, the distance R corresponds to a distance indicated by the radius of the circle 23 in FIG. 7, for example.

Thereafter, if the laser irradiation position 2100 located ahead by the distance R reaches, in advance, a position (switching position) at which the discharge nozzle 18 changes the traveling direction to the 90-degree direction upon arrival ((B) in FIG. 18), the mover (the XY stage 22 in this example) moves the position of the laser light source 21 relative to the carriage 30 to thereby start movement to change the laser irradiation position 2100 to the 90-degree direction in advance of arrival of the discharge nozzle 18 ((C) in FIG. 18). At this time, the discharge nozzle 18 is located behind the switching position by the distance R and continues to travel and perform modeling on the straight line (straight line in the longitudinal direction) until reaching the switching position.

The discharge nozzle 18 and the laser light source 21 are held by the same holding member (the carriage 30). The discharge nozzle 18 moves the remaining distance R to the switching position, changes the orientation to the 90-degree direction at the switching position, and thereafter moves in the 90-degree direction.

Specifically, at the laser irradiation position 2100 (corresponding to a laser movement vector FIG. 18), a resultant vector of a velocity vector of the discharge nozzle 18 that travels in a longitudinal linear direction (corresponding to a "nozzle velocity vector" illustrated in FIG. 18) and a velocity vector of the laser light source 21 corresponding to the discharge nozzle 18 (corresponding to a "laser velocity vector" illustrated in FIG. 18) at the same time moves while being located ahead of the nozzle position by the distance R on a trajectory on which the nozzle position moves (i.e., a trajectory of the discharge position 1800). This control is realized by controlling, for example, a moving speed of the discharge nozzle 18 that travels in the longitudinal direction (i.e., a moving speed of the carriage 30) and controlling a moving speed of the laser light source 21 moved by the mover (a moving speed of the XY stage 22 in the X direction and the Y direction).

For example, at (A) to (B) in FIG. 18, the resultant vector has only a component of the nozzle velocity vector, and the magnitude of the laser velocity vector is 0. In other words, only movement control in a straight-travel direction of the carriage 30 is performed. With this control, the resultant vector at the laser irradiation position 2100 is represented by only the nozzle velocity vector caused by movement of the carriage 30 in a single direction, and moves while being located ahead of the nozzle position by the distance R on the trajectory of the discharge position 1800 in the single direction. At (C) and (D) in FIG. 18, the discharge nozzle 18 continues to move straightforward in the single direction and the laser irradiation position 2100 that has already reached the switching position is subjected to control by the mover to change the orientation to the 90-degree direction. Specifically, the resultant vector of the velocity vector of the discharge nozzle 18, which travels straightforward in the longitudinal direction, and the velocity vector of the laser light source 21, which is controlled such that the laser irradiation position 2100 is moved to the 90-degree direction in advance, is always oriented in the 90-degree direction. With this velocity control, even when the discharge nozzle 18 changes the modeling direction to the 90-degree direction (for example, switching at the corner portion of the rectangular solid), the laser irradiation position 2100 moves in advance on the same trajectory as the trajectory of the nozzle position at the time of changing the orientation to the 90-degree direction (i.e., the trajectory of the discharge position 1800). Therefore, it is possible to modify, always at a position that is located ahead by the distance R (ahead position), the discharge position 1800 at which the discharge nozzle 18 discharges the modeling material, i.e., an intended trajectory.

Further, it is preferable to control the moving speed of the discharge nozzle 18 and the moving speed of the laser light source 21 moved by the mover such that a time taken by the nozzle position to move the distance R to the switching position and a time taken by the laser irradiation position 2100 to move the distance R in the 90-degree direction become equal to each other, i.e., movements for changes to a different direction are completed simultaneously. For example, as illustrated at (D) and (E) in FIG. 18, the moving speed of the laser light source 21 (the moving speed of the XY stage 22 in the X direction and the Y direction) is controlled such that the velocity vector of the discharge nozzle 18 and the resultant vector of the laser light source 21 that travels in the 90-degree direction always have the same magnitudes. With this control, it is possible to prevent the discharge nozzle 18 and the laser light source 21 from stopping movement and waiting in order to adjust timings during a period including times before and after the discharge nozzle 18 reaches the switching position.

Then, even after the modeling direction of the discharge nozzle 18 is changed to the 90-degree direction, modification is performed at the laser irradiation position 2100 of the laser light source 21 that is located ahead by the distance R in the traveling direction of the discharge nozzle 18 (at this time, a short-side direction of the rectangular solid), and the discharge nozzle 18 moves and discharges the filament as the modeling material on the trajectory ((F) in FIG. 18).

While the case has been described in which the modeling direction is changed to the 90-degree direction, this is one example, and the switching direction is not limited to the 90-degree direction. For example, in a third movement control pattern, a case will be described in which the discharge nozzle 18 changes the traveling direction to a 45-degree direction.

In this manner, by controlling the moving speed of the discharge nozzle 18 and the moving speed of the laser light source 21 under the conditions as described above, it is possible to cause the laser light source 21 to perform laser irradiation in advance on the trajectory on which the discharge nozzle 18 (i.e., the discharge position 1800) moves as illustrated at (G) in FIG. 18. For example, it is possible to accurately modify the lower layer even at a corner portion in the 90-degree direction or the like.

Second Movement Control Pattern

In the first movement control pattern, the case has been described in which when the laser irradiation position 2100 located ahead by the distance R reaches, in advance, the switching position at which the discharge nozzle 18 changes the traveling direction upon arrival, the laser irradiation position 2100 is started to move in the to-be-changed direction. In a second movement control pattern, a case will be described in which the laser irradiation position 2100 is started to move after the discharge nozzle 18 reaches the switching position.

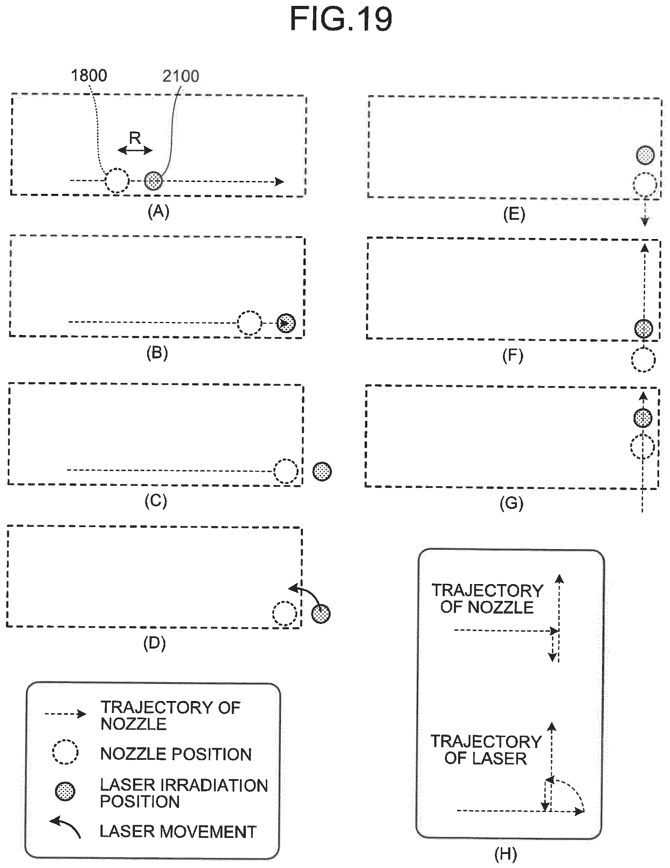

FIG. 19 is a diagram for explaining the second movement control pattern. Here, differences from the first movement control pattern will be mainly described, and explanation of common parts will be omitted appropriately. FIG. 19 illustrates, at (A) to (G), parts of the modeling operation on the three-dimensional modeled object MO (see FIG. 15), when viewed from the top surface side, similarly to FIG. 18. (A) and (B) in FIG. 19 correspond to (A) and (B) in FIG. 18, respectively.

In the second movement control pattern, as illustrated at (B) and (C) in FIG. 19, even after the laser irradiation position 2100 located ahead by the distance R first reaches the switching position, modeling control on the straight line is continuously performed until the discharge nozzle 18 reaches the switching position.

Then, if the discharge nozzle 18 reaches the switching position, the mover starts to move the laser irradiation position 2100 as indicated by an arrow at (D) in FIG. 19, and moves the laser irradiation position 2100 ahead of the discharge nozzle 18 in a direction (for example, the 90-degree direction) to which the modeling direction is changed ((E) in FIG. 19).

Subsequently, the carriage 30 is moved such that the laser irradiation position 2100 is started from the switching position, and the discharge nozzle 18 and the laser irradiation position 2100 are moved backward with respect to the 90-degree direction as indicated by an arrow at (E) in FIG. 19. In this example, the discharge nozzle 18 is temporarily located outside the rectangular solid.

From the above-described position, modeling on the straight line in the 90-degree direction is started by causing the discharge nozzle 18 to discharge the modeling material while performing laser irradiation at a position that is located ahead by the distance R in the modeling direction (90-degree direction) of the discharge nozzle 18 ((G) in FIG. 19).

FIG. 19 illustrates, at (H), a series of trajectories of the nozzle position and the laser irradiation position 2100 at the time of changing the modeling direction. In the second movement control pattern, extra movement is needed to move the discharge nozzle 18 and a longer time is needed to move the laser irradiation position 2100 as compared to the first movement control pattern. Further, trajectory accuracy at the switching position is reduced as compared to the first movement control pattern; therefore, if it is necessary to improve the accuracy, it is preferable to select control based on the first movement control pattern.

Third Movement Control Pattern

In the first movement control pattern, the case has been described in which the discharge nozzle 18 changes the traveling direction to the 90-degree direction. In the third movement control pattern, a case will be described in which the discharge nozzle 18 changes the traveling direction to the 45-degree direction.

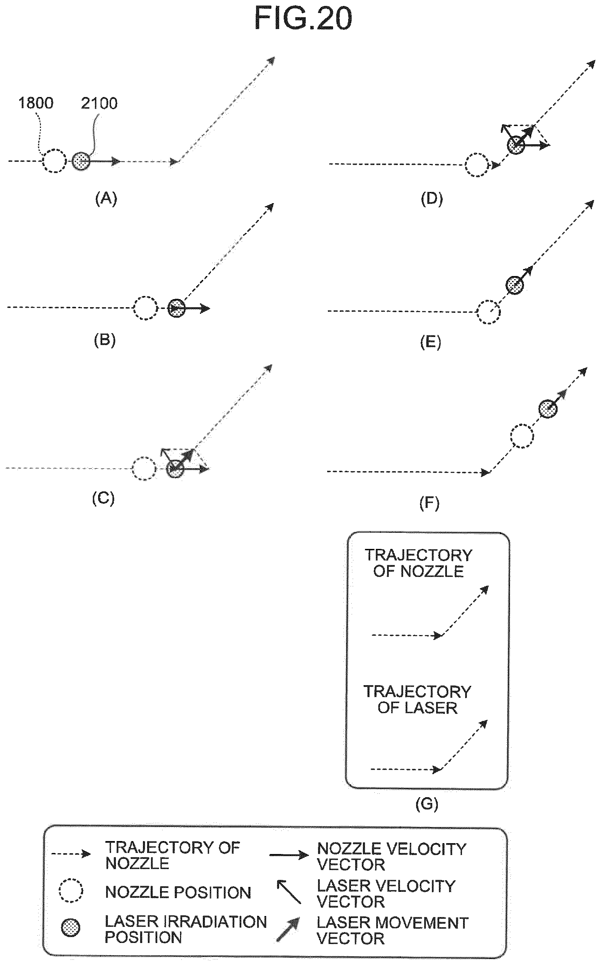

FIG. 20 is a diagram for explaining the third movement control pattern. Basic control is the same as in the case in which the switching direction is the 90-degree direction. In the following, differences from the first movement control pattern will be mainly described, and explanation of common parts will be omitted appropriately.

(A) to (F) in FIG. 20 correspond to respective states as illustrated at (A) to (F) in FIG. 18. FIG. 20 explains, at (A) to (F), basically the same states as illustrated in (A) to (F) in FIG. 18, respectively, except that the switching direction is set to the 45-degree direction.

A main difference in this pattern is, as illustrated at (C) and (D) in FIG. 20, the moving speed of the discharge nozzle 18 and the moving speed of the laser light source 21 moved by the mover are controlled such that the resultant vector of a vector representing the moving speed of the nozzle position and a vector representing the moving speed of the laser irradiation position 2100 is always oriented in the 45-degree direction. With this velocity control, even when the discharge nozzle 18 changes the modeling direction to the 45-degree direction, it is possible to cause the laser light source 21 to emit, in advance, light onto the trajectory in the 45-degree direction in which the discharge nozzle 18 moves. In other words, the trajectory of the nozzle position in the 45-degree direction and the trajectory of the laser irradiation position 2100 become the same ((G) in FIG. 20).

Meanwhile, it is preferable to control the moving speed of the discharge nozzle 18 and the moving speed of the laser light source 21 moved by the mover such that the movement control performed by the mover is completed at the same time the discharge nozzle 18 reaches the switching position.

In the case of the 45-degree direction, a switching angle is moderate relative to the case of the 90-degree direction; therefore, a moving distance in which the laser light source 21 moves is further reduced.

Fourth Movement Control Pattern

In the first movement control pattern, the case has been described in which the traveling direction of the discharge nozzle 18 is modified with laser light. In contrast, a case will be described in which a downstream side in the traveling direction of the discharge nozzle 18, i.e., a discharged modeled surface, is to be modified will be described. For example, in some cases, a modifier may be configured to perform modification by blowing air or the like to reduce temperature of the discharged modeled surface. In this case, the modification is performed not at the ahead position corresponding to the traveling direction of the discharge nozzle 18, but at a following position (tracing position) corresponding to the downstream side in the traveling direction of the discharge nozzle 18, while tracing the discharge nozzle 18. Therefore, in a fourth movement control pattern, control in a case where the modifier (for example, an air blower, such as a fan) modifies the downstream side in the traveling direction of the discharge nozzle 18 will be described.

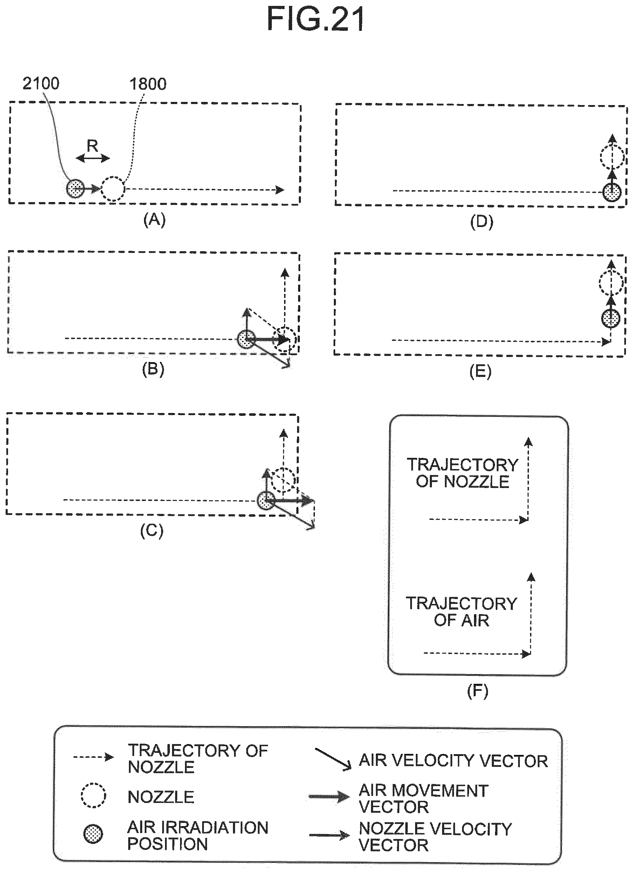

FIG. 21 is a diagram for explaining the fourth movement control pattern. Even in the case of being behind, the same idea as being ahead is adopted. A difference is that air, such as cool air, is blown toward the discharge position 1800 of the discharge nozzle 18. Therefore, in FIG. 21, directions of vectors overlaid on air positions are different.

Specifically, first, on the straight line of the outer periphery of the rectangular solid, the discharge nozzle 18 discharges the filament as the modeling material while moving, and the air blower blows air to a position behind the discharge position 1800 of the discharge nozzle 18 by the distance R in the traveling direction (traveling direction on the straight line) of the discharge nozzle 18 ((A) in FIG. 21). Meanwhile, the distance R may be set appropriately.

Thereafter, if the discharge nozzle 18 reaches the position (switching position) at which the traveling direction is changed to the 90-degree direction ((B) in FIG. 21), the carriage 30 holding the discharge nozzle 18 starts to perform control on movement in the 90-degree direction, and the mover (the XY stage 22 in this example) held by the carriage 30 starts to perform control of moving the position of the air blower relative to the carriage 30. At this time, the air position is located behind the switching position of the discharge nozzle 18 by the distance R. Therefore, the mover controls movement of the position of the air blower such that the air position is moved on the straight line so as to reach the switching position.

AT (B) to (D) in FIG. 21, movement of the air blower is indicated by velocity vectors that are overlaid on the air positions. At (B) and (C) in FIG. 21, with respect to the air blower, the moving speed of the discharge nozzle 18 and the moving speed of the air blower moved by the mover are controlled such that a resultant vector of a velocity vector of the discharge nozzle 18 that moves in the 90-degree direction and a velocity vector of the air blower relative to the carriage 30 is always oriented in the linear direction that is adopted before the direction is changed to the 90-degree direction. At a position as illustrated at (D) in FIG. 21, movement of the air blower by the mover is stopped, and, at (D) and (E) in FIG. 21, the carriage 30 is moved to move the discharge nozzle 18 and the air blower in the 90-degree direction while maintaining the distance R.

At (D) and (E) in FIG. 21, the discharge nozzle 18 performs modeling linearly in the 90-degree direction, and the air blower blows cool air to a position behind the discharge nozzle 18 by the distance R in a tracing manner.

Meanwhile, it is preferable to control the moving speed of the discharge nozzle 18 and the moving speed of the laser light source 21 moved by the mover such that the movement control performed by the mover is completed at the same time the discharge nozzle 18 reaches the position separated by the distance R in the 90-degree direction from the switching position.

With this velocity control, even when the discharge nozzle 18 changes the modeling direction to the 90-degree direction, as illustrated at (F) in FIG. 21, the air position at which air is blown always overlaps with, in a tracing manner, the trajectory of the nozzle position at which the discharge nozzle 18 moves while discharging the modeling material. In other words, it is possible to accurately perform modification on the discharged modeling material even at corner portions of the rectangular solid.

Fifth Movement Control Pattern

A case will be described below in which the discharge nozzle 18 changes the traveling direction to a 180-degree direction. For example, when an infill portion (an inner portion of a modeled object) is to be modeled, reciprocating scanning is performed and the traveling direction of the discharge nozzle 18 is changed to an opposite direction accordingly. When the traveling direction is changed to the 180-degree direction as described above, it is efficient to simultaneously use two modifiers of the same type (a first modifier and a second modifier). Therefore, the two modifiers are fixed at certain positions such that respective modification target positions are located at opposing positions with respect to the discharge nozzle 18 on a scanning line (path or tool path), and the two modifiers are used in an alternating manner, i.e., switched from one to the other in accordance with the traveling direction, while maintaining the positions without moving the positions.

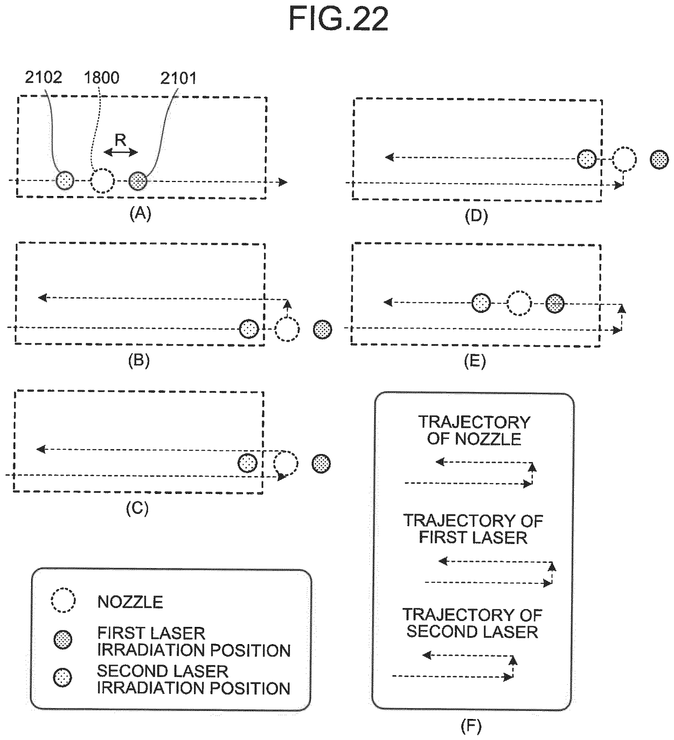

FIG. 22 is a diagram for explaining a fifth movement control pattern. In this configuration, the two laser light sources 21 serving as the two modifiers are arranged on an upstream side and a downstream side in the traveling direction of the discharge nozzle 18. In FIG. 22, the laser irradiation position 2100 (a first laser irradiation position 2101 and a second laser irradiation position 2102) of the respective laser light sources 21 are indicated on the upstream side and the downstream side in the traveling direction of the nozzle position.

In the modeling direction indicated by an arrow at (A) in FIG. 22, laser is applied to the laser irradiation position 2101 that is located at a position ahead of the nozzle position by the distance R in the traveling direction, by using a first laser light source in the traveling direction of the discharge nozzle 18.

If a second laser light source reaches the laser irradiation position 2102 of the second laser light source, a scanning line is changed by the control of the carriage 30 ((B) to (D) in FIG. 22). During this operation, laser irradiation by the first laser light source is stopped.

Then, on the changed scanning line, in a return direction, the second laser light source applies laser to the laser irradiation position 2102 that is located at a position ahead of the nozzle position by the distance R, and the discharge nozzle 18 is moved and caused to perform modeling in the same direction (return direction) ((E) in FIG. 22).

Sixth Movement Control Pattern

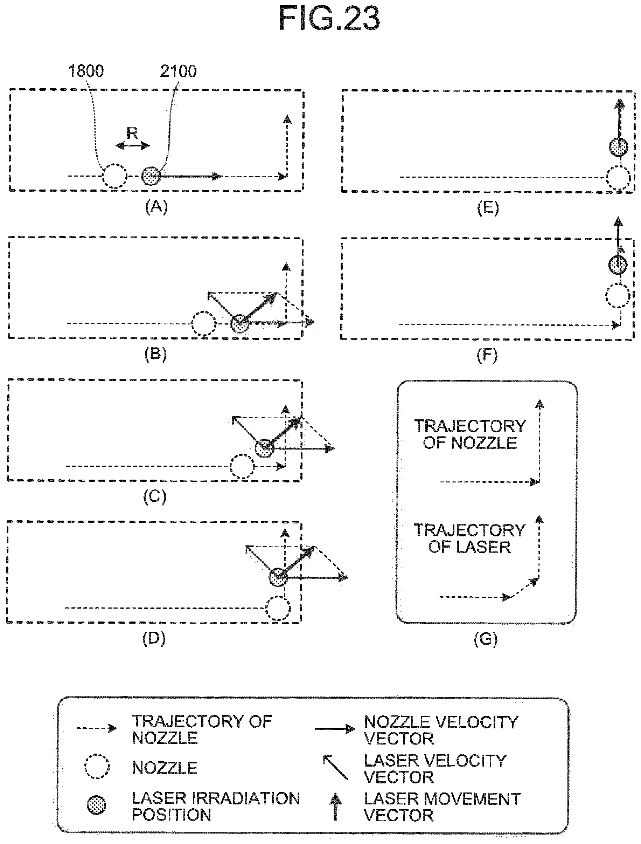

A control method in a case where modification is not needed in the vicinity of the switching position will be described. FIG. 23 is a diagram for explaining a sixth movement control pattern. In the following, differences from the first movement control pattern will be mainly described, and explanation of common parts will be omitted appropriately.

(A) to (F) in FIG. 23 correspond to respective states as illustrated at (A) to (F) in FIG. 18. At (A) to (F) in FIG. 23, different kinds of velocity control are performed in the vicinity of the switching position. Specifically, as illustrated at (B) in FIG. 23, movement control of the laser irradiation position 2100 in the 90-degree direction is started in advance, before the laser irradiation position 2100 reaches the switching position of the discharge nozzle 18. Therefore, as illustrated at (B) to (D) in FIG. 23, the moving speed is controlled such that a resultant vector of a vector representing the moving speed of the discharge nozzle 18, i.e., the moving speed of the nozzle position, and a vector of the moving speed of the laser irradiation position 2100 indicates a smaller angle than the 90-degree direction. In this case, the laser irradiation position 2100 reaches the straight line in the 90-degree direction by taking a shortcut, without moving toward the switching position. Meanwhile, a timing to start to move the laser irradiation position 2100 and a velocity after the movement is started may be appropriately changed depending on the moving speed of the discharge nozzle 18 and an angle of the switching direction.

After taking the shortcut, modeling is performed on the straight line in the 90-degree direction while performing modification from the laser irradiation position 2100 as illustrated at (E) in FIG. 23 ((E) and (F) in FIG. 23).

FIG. 23 illustrates, at (G), a series of trajectories of the nozzle position and the laser irradiation position 2100 at the time of changing the modeling direction. In the sixth movement control pattern, it is assumed that the modification is not needed in the vicinity of the switching position; therefore, while the trajectory of the nozzle position is a trajectory that passes through the switching position, the trajectory of the laser irradiation position 2100 is a trajectory that is moved in the 90-degree direction before reaching the switching position and that takes a shortcut without passing through the switching position. Meanwhile, a range corresponding to the vicinity of the switching position may be appropriately set in accordance with modification accuracy that is needed at the switching position.

It is preferable to control the moving speed of the laser light source 21 moved by the mover such that the movement control performed by the mover is completed before or at the same time the discharge nozzle 18 reaches the switching position.

In this manner, if modification is not performed in the vicinity of the switching position at the time of changing the direction, it may be possible to take a shortcut in moving the laser light source. For example, in some cases, modification is not performed on an end portion in order to maintain a shape, depending on a modeling shape. In this case, it is effective to perform control based on the sixth movement control pattern. It is not necessary to control the moving speed of the discharge nozzle 18, so that it is possible to adopt a predetermined speed and realize higher productivity.

Furthermore, if modification is not performed in the vicinity of the switching position, it is not necessary to take an accurate trajectory as the trajectory of the laser irradiation position 2100 in the vicinity of the switching position, as compared to the trajectory of the nozzle position. Therefore, although laser irradiation control has not specifically been explained above, it may be possible to perform irradiation control by reducing irradiation intensity or stopping irradiation in a shortcut movement path.

Seventh Movement Control Pattern

In the sixth movement control pattern, the case has been described in which the discharge nozzle 18 changes the traveling direction to the 90-degree direction. In a seventh movement control pattern, a case will be described in which the discharge nozzle 18 changes the traveling direction to the 45-degree direction.

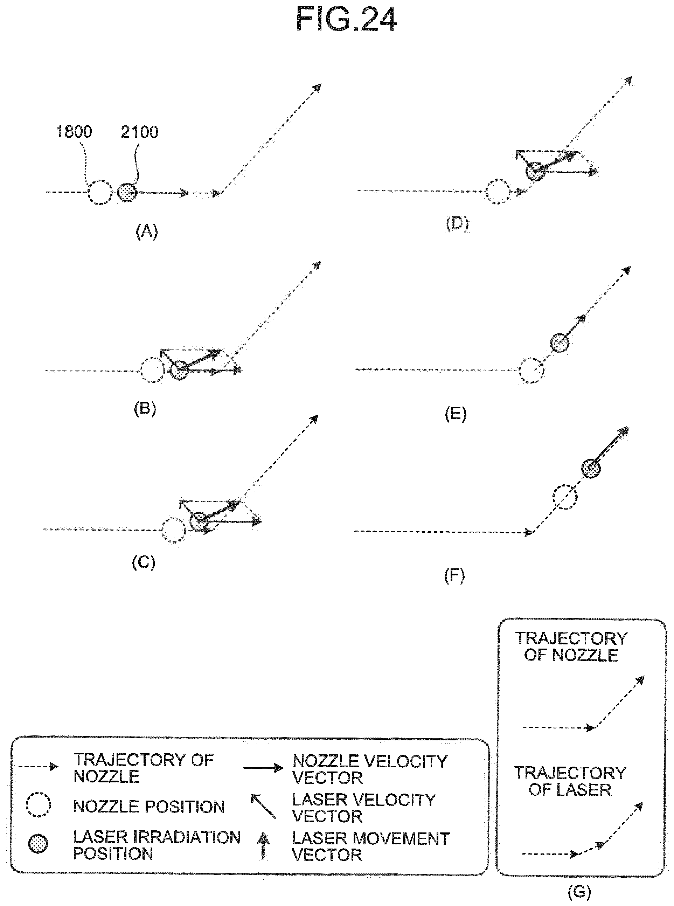

FIG. 24 is a diagram for explaining the seventh movement control pattern. Basic control is the same as in the case in which the switching direction is the 90-degree direction. (A) to (F) in FIG. 24 correspond to respective states as illustrated at (A) to (F) in FIG. 23. FIG. 24 explains, at (A) to (F), basically the same states as illustrated at (A) to (F) in FIG. 23 respectively, except that the switching direction is set to the 45-degree direction. Specifically, the laser irradiation position 2100 starts to move in the 45-degree direction before reaching the switching position for changing the direction to the 45-degree direction, and takes a shortcut to the straight line in the 45-degree direction without passing through the switching position. Further, FIG. 24 illustrates, at (G), a series of trajectories of the nozzle position and the laser irradiation position 2100 at the time of changing the modeling direction to the 45-degree direction. Other parts are the same as those of the sixth movement control pattern, and therefore, explanation thereof will be omitted.

Eighth Movement Control Pattern

An eighth movement control pattern in the three-dimensional modeling device 1 according to the embodiment will be described below. As illustrated in FIG. 1 and FIG. 10 for example, the three-dimensional modeling device 1 according to the embodiment includes a pair of the XY stages 22, for example. When applying laser to a portion at a 90-degree angle in a rectangle, a square, or the like while performing modeling, the three-dimensional modeling device 1 according to the embodiment performs switching control on the XY stage 22 responsible for laser irradiation from one of the XY stages 22 to the other one of the XY stages 22 or from the other one of the XY stages 22 to the one of the XY stages 22, on the basis of a side to be modeled. Meanwhile, the number of the XY stages 22 may be one or three or more. In the following description, it is assumed that the XY stages 22, as a pair, are used.

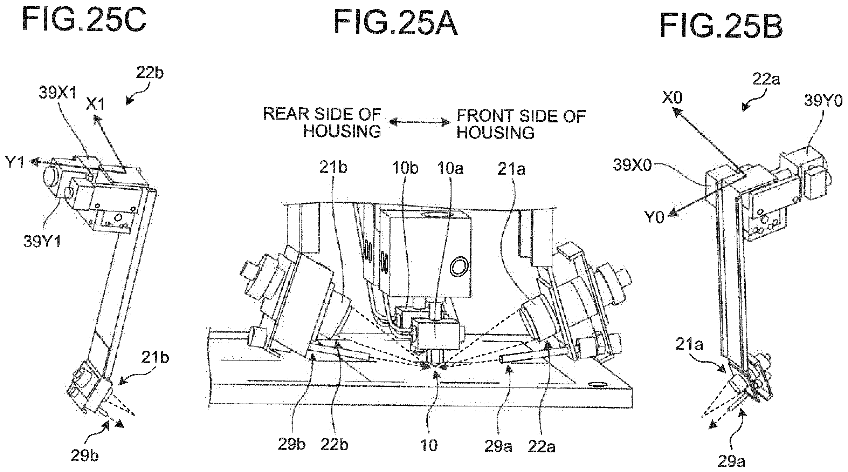

Specifically, FIGS. 25A to 25B illustrate detailed perspective views of the nozzle peripheral portion and the pair of XY stages 22. FIG. 25A is a perspective view of the nozzle peripheral portion. FIG. 25B is a perspective view of a front XY stage 22a (one example of the first modifier) that is arranged on the front of the housing 2 of the three-dimensional modeling device 1. FIG. 25C is a perspective view a rear XY stage 22b (one example of the second modifier) that is arranged on the rear of the housing 2 of the three-dimensional modeling device 1.

As described above, the discharge module 10 includes the two discharge nozzles as illustrated in FIG. 25A. The first discharge nozzle includes a first discharge nozzle 10a that melts and discharges the filament as the model material that constitutes the three-dimensional modeled object MO and a second discharge nozzle 10b that melts and discharges the filament as the support material that supports the model material.

Further, as illustrated in FIG. 25B, a laser light source 21a (one example of a modification function) that irradiates the three-dimensional modeled object MO with laser light and an air-cooling nozzle 29a (one example of a cooling function) that blows air, for air-cooling, to the three-dimensional modeled object MO are arranged on the front XY stage 22a. Similarly, as illustrated in FIG. 25C, a laser light source 21b that irradiates the three-dimensional modeled object MO with laser light and an air-cooling nozzle 29b that blows air, for air-cooling, the three-dimensional modeled object MO are arranged on the rear XY stage 22b. Each of the XY stages 22a and 22b is configured to perform laser irradiation at a slightly ahead position in the traveling direction of each of the discharge nozzles 10a and 10b and perform air-cool at a slightly following position of each of the discharge nozzles 10a and 10b.

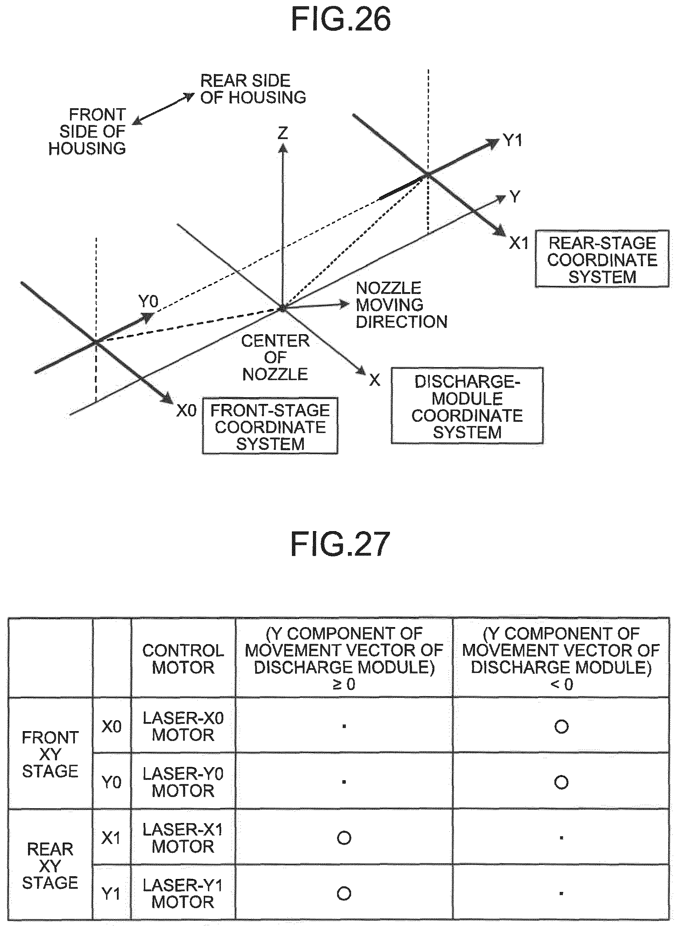

FIG. 26 is a diagram illustrating moving coordinate systems of the discharge module 10 and each of the XY stages 22a and 22b. As illustrated in FIG. 26, the discharge module 10 is able to move three-dimensionally in the X-axis direction, the Y-axis direction that is perpendicular to the X-axis direction in a two-dimensional plane, and the Z-axis direction that is vertical to the X-axis and the Y-axis.

Further, the front XY stage 22a is able to move in an X0-axis direction going along the X-axis direction in which the discharge module 10 moves, and is also able to move in a Y0-axis direction going along the Y-axis direction in which the discharge module 10 moves. A laser-XO motor 39X0 illustrated in FIGS. 25A to 25C moves the front XY stage 22a in the X0-axis direction. Further, a laser-YO motor 39Y0 illustrated in FIGS. 25A to 25C moves the front XY stage 22b in the Y0-axis direction.

Similarly, the rear XY stage 22b is able to move in an X1-axis direction going along the X-axis direction in which the discharge module 10 moves, and is also able to move in a Y1-axis direction going along the Y-axis direction in which the discharge module 10 moves. A laser-XI motor 39X1 illustrated in FIGS. 25A to 25C moves the front XY stage 22a in the X1-axis direction. Further, a laser-Yl motor 39Y1 illustrated in FIGS. 25A to 25C moves the front XY stage 22b in the Y1-axis direction.

A moving destination of each of the XY stages 22a and 22b is designated based on each of coordinate systems as illustrated in FIG. 26. Further, the laser light sources 21a and 21b are able to freely move in each of the coordinate systems FIG. 26.

Which one of the XY stages 22a and 22b is caused to irradiate the three-dimensional modeled object MO with laser light is determined based on the moving direction of the discharge module 10 as illustrated in FIG. 27. As one example, FIG. 27 illustrates an example in which if a Y component is "smaller than 0 (zero)" when the discharge module 10 moves in the Y-axis direction, the front XY stage 22a irradiates the three-dimensional modeled object MO with laser light. Further, the example indicates that if the Y component is "equal to or larger than 0 (zero)" when the discharge module 10 moves in the Y-axis direction, the rear XY stage 22b irradiates the three-dimensional modeled object MO with laser light (and air).

In other words, the stage 22 (front or rear) that is responsible for laser light irradiation is determined based on the moving direction of the discharge module 10. The XY stage 22 that is not responsible for laser light irradiation is responsible for air-cooling control using air.

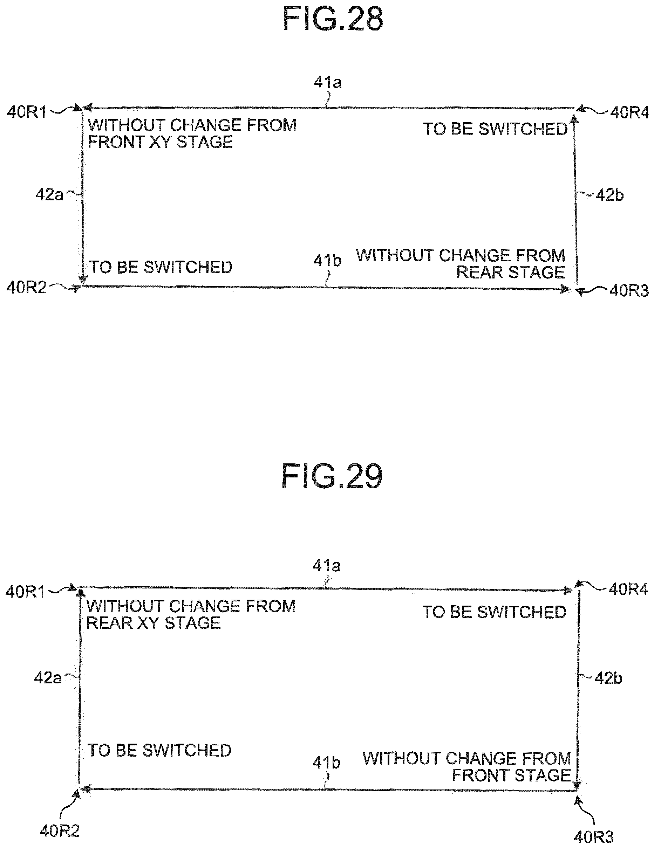

FIG. 28 is a diagram illustrating a movement path of each of the XY stages 22a and 22b and a switching timing to switch between the XY stage that is responsible for laser light irradiation and the XY stage that is responsible for air-cooling, in a case where the three-dimensional modeled object MO in the form of a rectangle is modeled by moving each of the XY stages 22a and 22b in a "counterclockwise direction". Similarly, FIG. 29 is a diagram illustrating a movement path of each of the XY stages 22a and 22b and a switching timing to switch between the XY stage that is responsible for laser light irradiation and the XY stage that is responsible for air-cooling, in a case where the three-dimensional modeled object MO in the form of a rectangle is modeled by moving each of the XY stages 22a and 22b in a "clockwise direction".

In the example illustrated in FIG. 28, the front XY stage 22a forms a first long-side portion 41a and a first short-side portion 42a that are connected via an upper left corner portion 40R1 in the counterclockwise direction. When modeling of the three-dimensional modeled object MO is completed as far as a lower left corner portion 40R2, the XY stage that is responsible for laser light irradiation is switched from the front XY stage 22a to the rear XY stage 22b. Subsequently, the rear XY stage 22b forms a second long-side portion 41b and a second short-side portion 42b that are connected via a lower right corner portion 40R3 in the counterclockwise direction. When modeling of the three-dimensional modeled object MO is completed as far as an upper right corner portion 40R4, the XY stage that is responsible for laser light irradiation is switched from the rear XY stage 22b to the front XY stage 22a. Meanwhile, the lower left corner portion 40R2 and the upper right corner portion 40R4 are one example of two corner portions that are located on a diagonal line of the modeled object.

In the example illustrated in FIG. 29, if formation of the first long-side portion 41a to the upper right corner portion 40R4 is completed while moving the rear XY stage 22b in the clockwise direction, the XY stage that is responsible for laser light irradiation is switched from the rear XY stage 22b to the front XY stage 22a. Subsequently, the front XY stage 22a forms the second short-side portion 42b and the second long-side portion 41b that are connected via the lower right corner portion 40R3 in the clockwise direction. When modeling of the three-dimensional modeled object MO is completed as far as the lower left corner portion 40R2, the XY stage that is responsible for laser light irradiation is switched from the front XY stage 22a to the rear XY stage 22b. Then, the rear XY stage 22b forms the first short-side portion 42a of the three-dimensional modeled object MO.

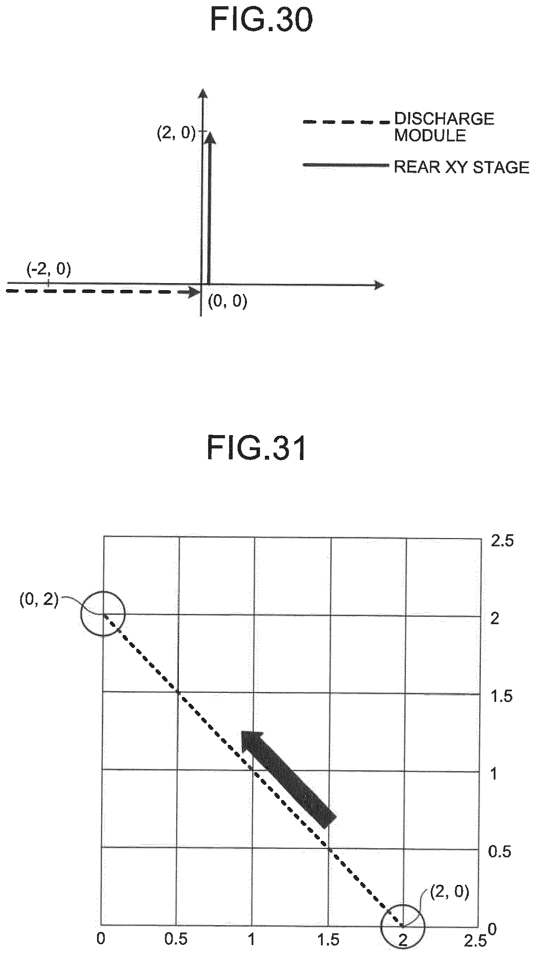

FIG. 30 is a diagram illustrating a coordinate to which the rear XY stage 22b moves (a laser coordinate at which laser light irradiation is performed) at a corner portion, such as the lower right corner portion 40R3 in FIG. 28 or the upper left corner portion 40R1 in FIG. 29, at which the XY stage 22 responsible for laser light irradiation is not switched. In FIG. 30, a dotted line represents a coordinate system (nozzle coordinate system) corresponding to the movement path of the discharge module 10, and a solid line represents the laser coordinate of the rear XY stage 22b.

As can be seen from FIG. 30, when the discharge module 10 moves to the nozzle coordinate system (-2, 0), a laser irradiation point of the rear XY stage 22b is located at an origin (0, 0) of the nozzle coordinate system. The control unit 100 (one example of a second mover) illustrated in FIG. 6 controls the rear XY stage 22b such that when the discharge module 10 moves from the nozzle coordinate system (-2, 0) to the origin (0, 0) of the nozzle coordinate system, the laser irradiation point of the rear XY stage 22b moves from the origin (0, 0) of the nozzle coordinate system to the nozzle coordinate system (2, 0). With this control, it is possible to fully perform laser light irradiation including the origin (0, 0) of the nozzle coordinate system.

FIG. 31 is a diagram illustrating movement control on the laser irradiation point of the rear XY stage 22b in a rear-stage coordinate system after the laser irradiation point has moved to the nozzle coordinate system (0, 0). As illustrated in FIG. 31, when the laser irradiation point moves to the nozzle coordinate system (0, 0), the control unit 100 causes the rear XY stage 22b to move from a rear-stage coordinate system (2, 0) to a rear-stage coordinate system (0, 2). In this case, the control unit 100 controls the rear XY stage 22b such that each of shaft speed components in a negative X-axis direction of the rear stage and a positive Y-axis direction of the rear stage moves at the same speed as the moving speed of the discharge module 10 in the nozzle coordinate system. With this control, even if the discharge module 10 continuously moves in the positive X-axis direction of the nozzle coordinate system, it is possible to move the laser irradiation point along the positive Y-axis direction and continuously perform laser light irradiation.

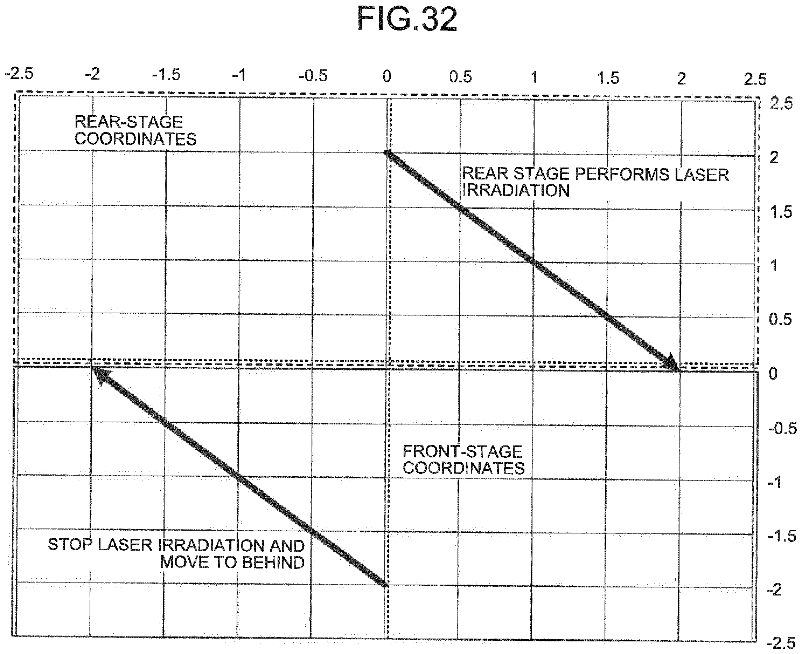

FIG. 32 is a diagram illustrating how the XY stages 22a and 22b are switched from one to the other at a corner portion, such as the lower left corner portion 40R2 in FIG. 28 and the upper right corner portion 40R4 in FIG. 29, at which the XY stage 22 that is responsible for laser light irradiation is switched. In this case, the control unit 100 does not cause the discharge module 10 to stop discharging the filament FM, but causes the XY stage 22 that is responsible for air-cooling to stop performing air-cooling when the discharge module 10 moves to the nozzle coordinate system (0, 2). Then, the control unit 100 performs switching control between the XY stages 22a and 22b in preparation for control of movement of the discharge module 10 in the positive X-axis direction of the nozzle coordinate system. Then, the control unit 100 causes each of the front XY stage 22a and the rear XY stage 22b to move at the same moving speed as the moving speed of the discharge module 10 in the nozzle coordinate system along a trajectory as illustrated in FIG. 32.

With this control, it is possible to complete the switching control between laser light irradiation and air-cooling by the XY stages 22a and 22b at the same time the discharge module 10 moves to the origin (0, 0) of the nozzle coordinate system, and it is possible to irradiate the three-dimensional modeled object MO, which is modeled in the positive X-axis direction of the nozzle coordinate system, with laser light.

Case where Switching Control is not Needed

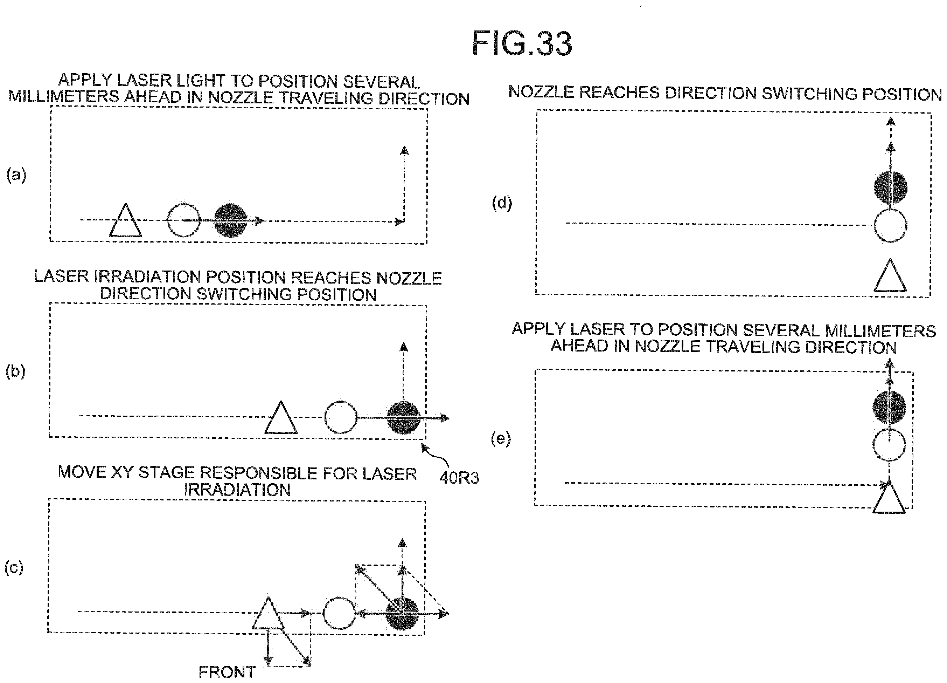

FIG. 33 is a diagram illustrating a laser light irradiation position, a cooling air blowing position, and a movement position of the discharge module 10 in a case where the switching control between laser irradiation and air-cooling by the XY stages 22a and 22b is not needed. In FIG. 33, a black circle "●" represents the laser light irradiation position, a white circle "○" represents the movement position of the discharge module 10, and a triangle "Δ" represents a cooling air emission position. As illustrated at (a) in FIG. 33, a position located ahead of the movement position of the discharge module 10 by several mm, such as 2 mm, is irradiated with laser light, and a position behind the movement position of the discharge module 10 by several mm, such as 2 mm, is cooled by air.

As illustrated at (b) in FIG. 33, if the laser light irradiation position moves to the lower right corner portion 40R3 that is a position at which the direction of the discharge module 10 is to be changed, the control unit 100 causes the XY stage 22 responsible for the laser light irradiation to move in the negative X-axis direction and the positive Y-axis direction at the same moving speed as the moving speed of the discharge module 10 as illustrated at (c) in FIG. 33. With this control, it is possible to fully apply laser light to the corner portion, such as the lower right corner portion 40R3, at which the discharge module 10 moves. Then, as illustrated at (d) in FIG. 33, even after the discharge module 10 has moved to the lower right corner portion 40R3 that is a position at which the direction is to be changed, it is possible to continuously perform laser light irradiation at a position located ahead of the movement position of the discharge module 10 by several mm as illustrated at (e) in FIG. 33.

Case where Switching Control is Needed

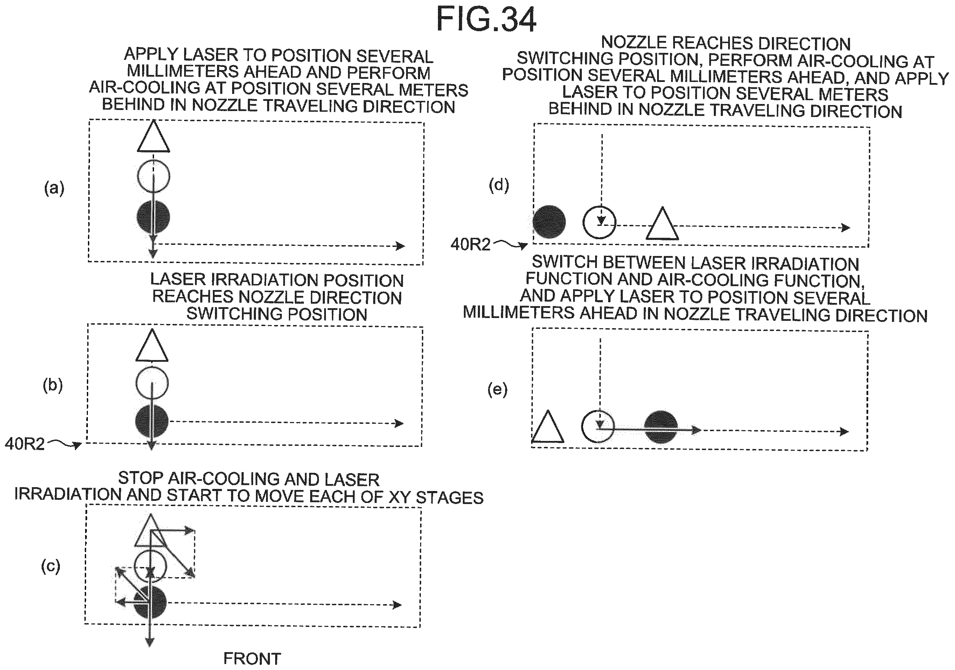

FIG. 34 is a diagram illustrating the laser light irradiation position, the cooling air blowing position, and the movement position of the discharge module 10 in a case where the switching control between laser irradiation and air-cooling by the XY stages 22a and 22b is needed. Even in FIG. 34, similarly to FIG. 33, a black circle "●" represents the laser light irradiation position, a white circle "○" represents the movement position of the discharge module 10, and a triangle "Δ" represents the cooling air emission position. Further, as illustrated at (a) in FIG. 34, a position located ahead of the movement position of the discharge module 10 by several mm, such as 2 mm, is irradiated with laser light, and a position behind the movement position of the discharge module 10 by several mm, such as 2 mm, is cooled by air.

As illustrated at (b) in FIG. 34, just before the laser light irradiation position moves to the lower left corner portion 40R2 that is a position at which the direction of the discharge module 10 is to be changed, the control unit 100 causes each of the XY stage 22 responsible for air-cooling and the XY stage 22 responsible for laser irradiation to stop operation. Further, as illustrated at (c) in FIG. 34, the control unit 100 moves the XY stage 22 that has been responsible for air-cooling to a position at which it is possible to perform laser light irradiation on a position located ahead of the discharge module 10 by several mm. At the same time, as illustrated at (c) in FIG. 34, the control unit 100 moves the XY stage 22 that has been responsible for laser irradiation to a position at which it is possible to perform air-cooling on a position located behind the discharge module 10 by several mm (see FIG. 32).

Subsequently, as illustrated at (d) in FIG. 34, when the discharge module 10 moves to the lower left corner portion 40R2 that is a position at which the direction is to be changed, the control unit 100 performs the switching control to cause the XY stage 22 that has been responsible for air-cooling to be responsible for laser light irradiation, and cause the XY stage 22 that has been responsible for laser light irradiation to be responsible for air-cooling. With this control, after the discharge module 10 has moved to the lower left corner portion 40R2, as illustrated at (e) in FIG. 34, the XY stage 22 that has been responsible for air-cooling performs laser light irradiation on the position located ahead of the discharge module 10 by several mm, and the XY stage 22 that has been responsible for laser light irradiation performs air-cooling on the position located behind the discharge module 10 by several mm.

Meanwhile, the control unit 100 does not perform laser irradiation on a portion corresponding to the side from (0, 0) to (2, 0) of the lower left corner portion 40R2 at a 90-degree angle, but immediately causes the filament FM to be discharged when the moving direction of the discharge module 10 is changed.

Effect of Eighth Movement Control Pattern

As described above, in the eighth movement control pattern, the control unit 100 models the three-dimensional modeled object MO while causing one of the XY stages 22 to apply laser light to the front (for example, several mm ahead) of the discharge module 10 and causing the other one of the XY stages 22 to air-cool the rear (for example, several mm behind) of the discharge module 10.

Further, before the discharge module 10 moves to a corner portion of the three-dimensional modeled object MO (for example, just before the corner portion), the control unit 100 causes each of the XY stages 22 to stop performing laser irradiation and air-cooling, and causes the XY stage 22 that has performed laser irradiation to move to a position at which the rear (for example, several mm behind) of the discharge module 10 is air-cooled. Furthermore, the control unit 100 causes the XY stage 22 that has performed air-cooling to move to a position at which the front (for example, several mm ahead) of the discharge module 10 is irradiated with laser light. Then, when the discharge module 10 moves to the corner portion of the three-dimensional modeled object MO, the control unit 100 drives and causes one of the XY stages 22 to switch from laser irradiation to air-cooling and causes the other one of the XY stages 22 to switch from air-cooling to laser irradiation.

With this control, it is possible to model the three-dimensional modeled object MO while causing each of the XY stages 22 to switch from laser irradiation to air-cooling or switch from air-cooling to laser irradiation when, for example, predetermined corner portions (the corner portions 40R2 and 40R4 in FIG. 28 and FIG. 29) of a rectangular solid, a square, or the like are modeled.

First Modification of Embodiment

A first modification of the embodiment, in particular, differences from the embodiment as described above, will be described below. As the first modification, an example will be described in which the laser light source 21 of the modification module 20 is replaced with a hot air source (one example of an "air blower").

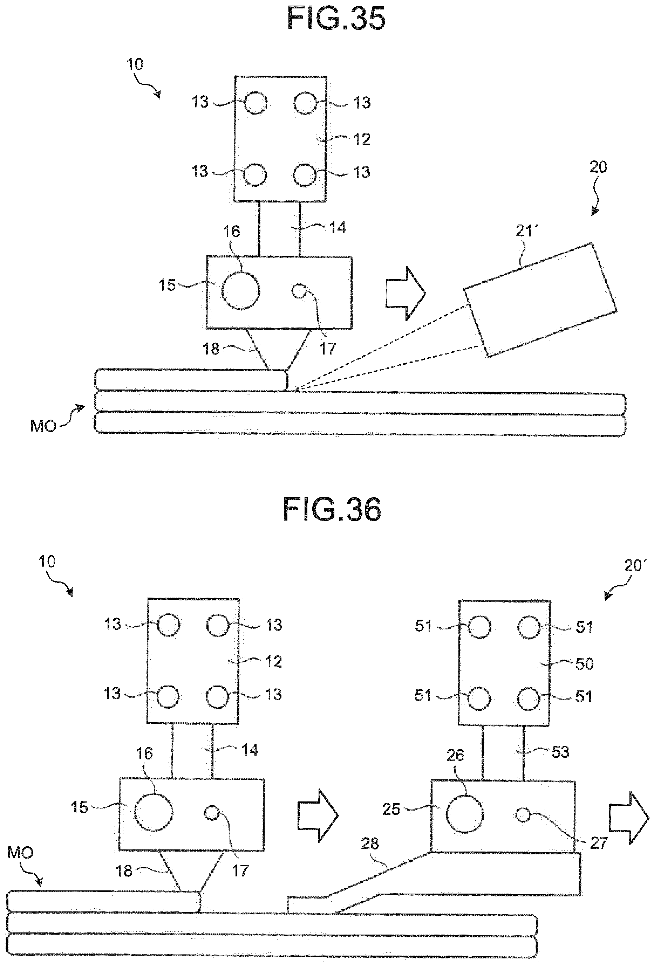

FIG. 35 is a diagram illustrating an example in which modification operation is performed using the hot air source according to the first modification. As illustrated in FIG. 35, the modification module 20 includes a hot air source 21'. Examples of the hot air source 21' include a heater and a fan. As illustrated in FIG. 35, the hot air source 21' blows hot air to heat and re-melt a lower layer. In this manner, in the first modification, the lower layer is heated by hot air, instead of light from the laser light source 21. Meanwhile, the air blower may be constituted by a fan, and it may be possible to cause the air blower to blow cold air to perform modification of reducing temperature of a surface of a discharged modeled object after the discharge nozzle 18 has discharged the filament as the modeling material.

Second Modification of Embodiment

A second modification of the embodiment, in particular, differences from the embodiment as described above, will be described below. As the second modification, a modification of the modification module 20 will be described.

FIG. 36 is a diagram illustrating an example in which modification operation is performed using a modification module according to the second modification. A modification module 20' (one example of a "heater") illustrated in FIG. 36 includes a heating plate 28 that applies heat and pressure to a lower layer in the three-dimensional modeled object MO, a heating block 25 that heats the heating plate 28, and a cooling block 50 that prevents thermal conduction from the heating block 25. The heating block 25 includes a heat source 26, such as a heater, and a thermocouple 27 that controls temperature of the heating plate 28. The cooling block 50 includes cooling sources 51. A guide 53 is arranged between the heating block 25 and the cooling block 50.

The modification module 20' is held by the XY stage 22 (see FIG. 3). The modification module 20' is heated by the heating block 25 and temperature thereof increases. To reduce transmission of the heat from the carriage 30 to the X-axis drive motor 32 (see FIG. 1), it is preferable that a transmission path including the filament guide 14 or the guide 53 has low thermal conductivity.

In the modification module 20', a lower edge of the heating plate 28 is arranged below a lower edge of the discharge nozzle 18 by an amount corresponding to a single layer. While the discharge module 10 and the modification module 20' move in the modeling direction (direction indicated by a white arrow) as illustrated in FIG. 35, the discharge module 10 causes the discharge nozzle 18 to discharge the filament FM, and at the same time, the heating plate 28 re-heats a layer (lower layer) just below a layer being modeled. Therefore, a temperature difference between the layer being modeled and the layer just below the modeled layer is reduced and materials are mixed between the layers, so that inter-layer strength of the modeled object can be improved.

Example of Tensile Strength Experiment on Three-Dimensional Modeled Object

Maximum tensile strength of a modeled object was measured by performing comparative experiments as will be described below by using the three-dimensional modeling device 1 as described in the embodiment and the modifications. The maximum tensile strength of the modeled object was measured by using Autograph AGS-5 kNX (manufactured by Shimadzu Corporation).

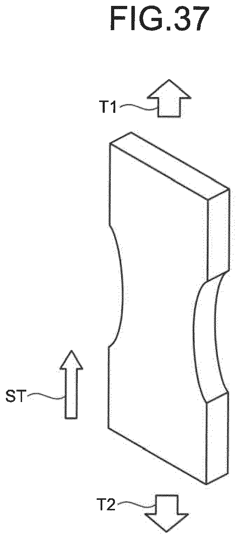

FIG. 37 is a diagram illustrating a tensile specimen. The tensile specimen conforms to ASTM D638-02a Type-V. The tensile specimen was modeled by depositing a modeling material on the modeling table 3 in a vertically upward direction ST by using the three-dimensional modeling device 1 with settings to be described later, and constituted by layers that were deposited in a long-side direction as illustrated in FIG. 37. A bottom surface of the deposited layer and a top surface of the deposited layer of the tensile specimen were mounted on a chuck of the autograph, and pulled in vertical directions T1 and T2 at 200 mm/min, so that a maximum tensile strength profile of the modeled object was obtained.

First Setting

Setting in which the three-dimensional modeling device 1 models the tensile specimen without performing operation of re-melting the lower layer will be described. In this setting, resin that is melted by heat was used as the filament serving as the modeling material. A pair of rollers made of SUS304 and having diameters of 12 mm was used as an introduction part of the discharge module 10. A cross section of a dimensional shape of the transmission path of the discharge module 10 had a circular bar shape. The discharge nozzle 18 on the leading end was made of brass, and an opening diameter of the leading end was set to 0.5 mm. A portion serving as the transmission path was formed in a cavity with a diameter of 2.5 mm. The cooling block 12 was made of SUS304, a water cooling tube was inserted in the cooling block 12, and the cooling block 12 was connected to a chiller. Setting temperature of the chiller was set to 10 degrees Celsius. The heating block 15 was also made of SUS304, similarly to the cooling block 12. A cartridge heater serving as the heat source 16 was inserted in the heating block 15, the thermocouple 17 was arranged so as to be symmetric to the filament, and the heating block 15 controlled temperature. Setting temperature of the cartridge heater was set to be equal to or higher than melting temperature of the resin. A scanning speed of the discharge nozzle 18 at the time of modeling was set to 10 mm/sec, and the tensile specimen as illustrated in FIG. 37 was modeled. In addition, a temperature range of the modeling table 3 was set such that a discharged material could be fixed onto the table. A thickness of a single layer of the modeled object in the Z-axis direction as resolution in the deposition direction was set to 0.25 mm.

Second Setting

In second setting, resin that is melted by heat was used as the filament serving as the modeling material. A pair of rollers made of SUS304 and having diameters of 12 mm was used as the introduction part of the discharge module 10. A cross section of the dimensional shape of the transmission path of the discharge module 10 had a circular bar shape. The discharge nozzle 18 on the leading end was made of brass, and an opening diameter of the leading end was set to 0.5 mm. A portion serving as the transmission path was formed in a cavity with a diameter of 2.5 mm. The cooling block 12 was made of SUS304, a water cooling tube was inserted in the cooling block 12, and the cooling block 12 was connected to a chiller. Setting temperature of the chiller was set to 10 degrees Celsius. The heating block 15 was also made of SUS304, similarly to the cooling block 12. A cartridge heater serving as the heat source 16 was inserted in the heating block 15, the thermocouple 17 was arranged so as to be symmetric to the filament, and the heating block 15 controlled temperature. Setting temperature of the cartridge heater was set to be equal to or higher than melting temperature of the resin. A scanning speed of the discharge nozzle 18 at the time of modeling was set to 50 mm/sec, and the tensile specimen as illustrated in FIG. 37 was modeled. In addition, a temperature range of the modeling table 3 was set such that a discharged material could be fixed onto the table. A thickness of a single layer of the modeled object in the Z-axis direction as resolution in the deposition direction was set to 0.25 mm.

First Comparative Experiment

The three-dimensional modeling device 1 performed modification control based on the first setting (image data to be used, temperature, and scanning speed) and the tensile specimen was modeled. In other words, a process of cooling a lower layer, re-melting a surface of the cooled lower layer by reheating the surface at higher temperature than the melting point of the filament, and forming an upper layer was repeated.

Second Comparative Experiment

The three-dimensional modeling device 1 performed modification control based on the second setting (image data to be used, temperature, and scanning speed) and the tensile specimen was modeled.

As a result of comparison between the first comparative experiment and the second comparative experiment, it was possible to achieve the maximum tensile strength that was larger than results that had been achieved when operation of re-melting the lower layer was not performed based on the first setting and the second setting. Therefore, it is confirmed that, if the three-dimensional modeling device 1 described as one example of the embodiment performs modification control while depositing layers, it is possible to increase the strength of the three-dimensional modeled object in the deposition direction.

Main Effects of Embodiment and Modifications

As described above, the discharge module 10 (one example of the discharger) of the three-dimensional modeling device 1 (one example of the modeling device) according to the embodiment discharges melted filament (one example of the modeling material) and forms a modeling material layer. The modification module 20 (one example of the modifier) of the three-dimensional modeling device 1 modifies the formed modeling material layer. The movement along the movement path in which orientation, such as laser irradiation direction, is maintained with respect to the three-axis Cartesian coordinate system, is performed so that it is possible to reduce the movement distance and improve productivity.

When the modification module 20 of the three-dimensional modeling device 1 controls modification by heating the modeling material layer of the lower layer, the discharge module 10 discharges the melted filament onto the heated modeling material layer, so that the modeling material layers are deposited and modeled. In this manner, by depositing the modeling material layer (upper layer) in the manner of discharging the filament onto the re-melted modeling material layer (lower layer), materials between the layers are mixed, so that it is possible to improve the strength of the modeled object in the deposition direction. Further, through the process of depositing the upper layer, it is possible to perform modeling without affecting the visibility of an outer shape.

Furthermore, the XY stage 22 of the three-dimensional modeling device 1 moves the modifier such that a predetermined angle is maintained with respect to at least two planes among the XY plane, the YZ plane, the XZ plane of the three-dimensional modeling device 1 at a predetermined position. Therefore, the modifier is able to heat the modeling material layer while following the movement of the discharge module 10.

Moreover, the three-dimensional modeling device 1 performs control of driving the modification module 20 in advance of movement of the discharge module 10, so that it is possible to perform modeling while effectively heating the modeling material layer.

Furthermore, the modification module 20 of the three-dimensional modeling device 1 is able to selectively heat a predetermined region of the modeling material layer. With this configuration, it is possible to perform modeling while maintaining the shape of the modeled object.

Moreover, the three-dimensional modeling device 1 includes the temperature sensor 104 (one example of the measurer) that measures temperature of the modeling material layer that is heated by the modifier. The modifier heats the modeling material layer on the basis of the temperature measured by the temperature sensor 104. Therefore, the three-dimensional modeling device 1 is able to appropriately re-heat the modeling material layer in accordance with desired property, such as interlayer adhesive strength or modeling accuracy.

Furthermore, the modifier may be the laser light source 21 (one example of a "light irradiator") that emits laser light. With this configuration, the modifier is able to selectively heat the modeled object without coming in contact with the modeled object.

Moreover, the modifier may be the hot air source (one example of the "air blower") that blows hot air. With this configuration, the modifier is able to selectively heat the modeled object without coming in contact with the modeled object. In this case, by physically mixing the materials between the layers, it is possible to improve a sticking force of the interference between the layers. In addition, by selectively heating the lower layer without deforming the outer shape of the modeled object and by performing next discharge while the lower layer is re-melted, it is possible to improve the sticking force of the interference.

Furthermore, the modification module may be the heating plate 28 or a tap nozzle (one example of the "heater") that heats the modeling material layer by coming in contact with the modeling material layer. With this configuration, the modification module is able to selectively heat the modeled object.

Moreover, the three-dimensional modeling device 1 may include a plurality of modification modules. With this configuration, even if the scanning direction of the discharge module 10 is changed, it is possible to heat the modeled object by any of the modification modules, so that it is possible to reduce modeling time.

Furthermore, the three-dimensional modeling device 1 may include a cooling unit that cools the heated layer made of the modeling material, the outer peripheral portion of the modeled object, or the like. Examples of a cooling method include a method of setting atmosphere temperature, a method of leaving as it is for a predetermined time, and a method of using a fan. With this configuration, the three-dimensional modeling device 1 is able to perform modeling while maintaining the shape of the modeled object.

Moreover, a plurality of different materials with different viscosities are arranged in the filament. Therefore, the discharge module 10 is able to discharge the filament such that the material with a lower viscosity is arranged in the outer peripheral portion under the control of the control unit 100.

Furthermore, the three-dimensional modeling device 1 may include an assist mechanism that supports the formed modeling material layer. With this configuration, it is possible to perform modeling while maintaining the shape of the formed modeling material layer.

Moreover, the three-dimensional modeling device 1 is able to model a three-dimensional modeled object for which a complicated mold is needed when mold injection is adopted or which is not realized by mold injection.

Furthermore, each of the XY stages 22 is caused to stop performing laser irradiation and air-cooling and the XY stage 22 that has performed laser irradiation is moved to a position at which the rear (for example, several mm behind) of the discharge module 10 is air-cooled before the discharge module 10 moves to a corner portion of the three-dimensional modeled object MO (for example, just before the corner portion). Further, the XY stage 22 that has performed air-cooling is moved to a position at which the front (for example, several mm ahead) of the discharge module 10 is irradiated with laser light. Then, when the discharge module 10 moves to the corner portion of the three-dimensional modeled object MO, the one of the XY stages 22 is caused to switch from laser irradiation to air-cooling, and the other one of the XY stages 22 is caused to switch from air-cooling to laser irradiation.

With this configuration, it is possible to model the three-dimensional modeled object MO while causing each of the XY stages 22 to switch from laser irradiation to air-cooling or from air-cooling to laser irradiation when, for example, predetermined corner portions (the corner portions 40R2 and 40R4 in FIG. 28 and FIG. 29) of a rectangular solid, a square, or the like are modeled.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

**Claims**

1. A modeling device comprising:

   a discharger configured to discharge a melted modeling material;
   a first mover configured to move the discharger and a modeling platform on which the modeling material is discharged by the discharger, relative to each other;
   a modifier configured to modify a layer formed of the modeling material discharged by the discharger; and
   a second mover configured to move the modifier relative to the discharger, wherein
   the second mover is configured to move the modifier along a movement path in which an orientation of the modifier is maintained with respect to a three-axis Cartesian coordinate system.

2. The modeling device according to claim 1, wherein the second mover is configured to move the modifier in accordance with a traveling direction of the discharger.

3. The modeling device according to claim 1 or 2, wherein the second mover is configured to move the modifier relative to the discharger along a curve that represents a modification position when the discharger moves in any direction from a discharge position of the discharger.

4. The modeling device according to any one of claims 1 to 3, wherein the modifier includes a plurality of modifiers, and the second mover includes a plurality of second movers corresponding to the plurality of modifiers.

5. The modeling device according to claim 4, wherein the plurality of modifiers include a first modifier and a second modifier, and
one of the first modifier and the second modifier is configured to be moved in accordance with a traveling direction of the discharger.

6. The modeling device according to any one of claims 1 to 5, wherein
the discharger includes a plurality of discharge nozzles, and
the second mover is shared by the plurality of discharge nozzles, and is configured to move the modifier corresponding to the second mover for a discharge nozzle of the plurality of discharge nozzles, the modeling material being to be discharged from the discharge nozzle.

7. The modeling device according to any one of claims 1 to 6, wherein the discharger is configured to discharge a model material and a support material to model a model part and a support part.

8. The modeling device according to any one of claims 1 to 7, wherein the modifier is configured to selectively modify a predetermined region of the layer formed of the modeling material.

9. The modeling device according to any one of claims 1 to 8, further comprising:

a measurer configured to measure a temperature of the layer formed of the modeling material, wherein
the modifier is configured to heat the layer based on the temperature measured by the measurer.

10. The modeling device according to any one of claims 1 to 9, wherein the modifier is a light irradiator.

11. The modeling device according to any one of claims 1 to 10, wherein the modifier is an air blower.

12. The modeling device according to any one of claims 1 to 11, wherein the modifier is a heater configured to heat the layer formed of the modeling material.

13. The modeling device according to claim 1, wherein the first mover and the second mover is configured to, when a moving direction of the discharger is changed to a different direction, move the discharger and the modifier such that the modifier moves on a trajectory on which the moving direction of the discharger is to be changed, in advance of or following movement of the discharger.

14. A method of causing a discharger to discharge a melted modeling material to deposit a layer, the method comprising:

causing a modifier to move along a movement path in which an orientation of the modifier is maintained with respect to a three-axis Cartesian coordinate system, and
causing the modifier to modify a lower layer in a traveling direction of the discharger.

# FIG.1

# FIG.2

# FIG.3

# FIG.4

# FIG.5

# FIG.6

1

100

CONTROL UNIT

32
X-AXIS DRIVE MOTOR

33
Y-AXIS DRIVE MOTOR

20

22
XY STAGE

104
TEMPERATURE SENSOR

21
LASER LIGHT SOURCE

IMAGING MODULE ～101

TORSIONAL ROTATION MECHANISM ～102

DIAMETER MEASUREMENT UNIT ～103

EXTRUDER ～11

COOLING BLOCK ～12

DISCHARGE NOZZLE ～18

10

39
SIDE SURFACE COOLING UNIT

37
CLEANING BRUSH

3

MODELING TABLE

HEATER

36
Z-AXIS DRIVE MOTOR

# FIG.7

# FIG.8

EP 3 659 781 A1

(a) IN CASE OF 0-DEGREE DIRECTION

Z

10

P

A

X

MODELING DIRECTION (0°)

Y

(b) IN CASE OF 60-DEGREE DIRECTION

Z

10

P

B

X

MODELING DIRECTION (60°)

Y

(c) IN CASE OF 90-DEGREE DIRECTION

Z

10

P

C

X

MODELING DIRECTION (90°)

Y

(d) IN CASE OF 150-DEGREE DIRECTION

Z

P

D

10

MODELING DIRECTION (150°)

X

Y

# FIG.9

# FIG.10

# FIG.11A

AS

Ln

Ln-1

OS

Z-AXIS

# FIG.11B

Ln

Ln-1

OS

# FIG.11C

M

S

Ln

Ln-1

OS

# FIG.12A

# FIG.12B

# FIG.12C

# FIG.13A

S      M

Ln

Ln-1

Ln-2

RM

OS

# FIG.13B

S      M

Ln

Ln-1

Ln-2

RM

OS

# FIG.13C

S      M

Ln

RM

Ln-1

Ln-2

OS

## FIG.14A

## FIG.14B

## FIG.14C

# FIG.15

# FIG.16

START

n=1 — S11

FORM LOWERMOST LAYER — S12

n=n+1 — S13

PERFORM RE-IRRADIATION AND FORM LAYER — S14

IS UPPERMOST LAYER FORMED? — S15
NO
YES

END

# FIG.17

START MODIFICATION CONTROL

S141
MOVE XY STAGE IN MODELING DIRECTION

S142
ACQUIRE TEMPERATURE OF LOWER LAYER

S143
CONTROL IRRADIATION PERFORMED BY LASER LIGHT SOURCE

S144
IS MODELING DIRECTION TO BE CHANGED?    YES

NO

S145
IS FORMATION OF n-TH LAYER COMPLETED?    NO

YES

END

# FIG.18

(A)

1800    2100

R

(B)

(C)

(D)

(E)

(F)

(G)

TRAJECTORY
OF NOZZLE

TRAJECTORY
OF LASER

| ----→ | TRAJECTORY OF NOZZLE | ——→ | NOZZLE VELOCITY VECTOR |
| ○ | NOZZLE POSITION | ↖ | LASER VELOCITY VECTOR |
| ◉ | LASER IRRADIATION POSITION | ↑ | LASER MOVEMENT VECTOR |

# FIG.19

(A)

(B)

(C)

(D)

(E)

(F)

(G)

1800   2100

R

TRAJECTORY OF NOZZLE

NOZZLE POSITION

LASER IRRADIATION POSITION

LASER MOVEMENT

TRAJECTORY OF NOZZLE

TRAJECTORY OF LASER

(H)

# FIG.20

(A)

(B)

(C)

(D)

(E)

(F)

TRAJECTORY
OF NOZZLE

TRAJECTORY
OF LASER

(G)

| | | | |
|---|---|---|---|
| ----→ | TRAJECTORY OF NOZZLE | ⟶ | NOZZLE VELOCITY VECTOR |
| ◯ | NOZZLE POSITION | ↖ | LASER VELOCITY VECTOR |
| ⊙ | LASER IRRADIATION POSITION | ↗ | LASER MOVEMENT VECTOR |

# EP 3 659 781 A1

# FIG.21

(A)

(B)

(C)

(D)

(E)

TRAJECTORY
OF NOZZLE

TRAJECTORY
OF AIR

(F)

| | | |
|---|---|---|
| ----> | TRAJECTORY OF NOZZLE | AIR VELOCITY VECTOR |
| ⊙ | NOZZLE | AIR MOVEMENT VECTOR |
| ⊙ | AIR IRRADIATION POSITION | NOZZLE VELOCITY VECTOR |

43

# FIG.22

2102  1800  2101

(A)

(D)

(B)

(E)

(C)

NOZZLE

FIRST LASER
IRRADIATION POSITION

SECOND LASER
IRRADIATION POSITION

TRAJECTORY
OF NOZZLE

TRAJECTORY OF
FIRST LASER

TRAJECTORY OF
SECOND LASER

(F)

# FIG.23

(A)

(B)

(C)

(D)

(E)

(F)

(G)

1800  2100

R

TRAJECTORY OF NOZZLE

TRAJECTORY OF LASER

TRAJECTORY OF NOZZLE

NOZZLE

LASER IRRADIATION POSITION

NOZZLE VELOCITY VECTOR

LASER VELOCITY VECTOR

LASER MOVEMENT VECTOR

# FIG.24

1800  2100

(A)

(B)

(C)

(D)

(E)

(F)

| TRAJECTORY OF NOZZLE | NOZZLE VELOCITY VECTOR |
| NOZZLE POSITION | LASER VELOCITY VECTOR |
| LASER IRRADIATION POSITION | LASER MOVEMENT VECTOR |

TRAJECTORY OF NOZZLE

TRAJECTORY OF LASER

(G)

# FIG.25B

22a

X0

39X0

Y0

39Y0

21a

29a

# FIG.25A

REAR SIDE OF HOUSING ←→ FRONT SIDE OF HOUSING

10a

10b

21a

21b

29a  22a

10

22b

29b

# FIG.25C

22b

39X1  X1

39Y1

Y1

21b

29b

# FIG.26

# FIG.27

| | | CONTROL MOTOR | (Y COMPONENT OF MOVEMENT VECTOR OF DISCHARGE MODULE) $\geq 0$ | (Y COMPONENT OF MOVEMENT VECTOR OF DISCHARGE MODULE) $< 0$ |
|---|---|---|---|---|
| FRONT XY STAGE | X0 | LASER-X0 MOTOR | . | O |
| | Y0 | LASER-Y0 MOTOR | . | O |
| REAR XY STAGE | X1 | LASER-X1 MOTOR | O | . |
| | Y1 | LASER-Y1 MOTOR | O | . |

# FIG.28

40R1 — 41a — 40R4

WITHOUT CHANGE FROM
FRONT XY STAGE

TO BE SWITCHED

42a

42b

TO BE SWITCHED

41b

WITHOUT CHANGE FROM
REAR STAGE

40R2

40R3

# FIG.29

40R1 — 41a — 40R4

WITHOUT CHANGE FROM
REAR XY STAGE

TO BE SWITCHED

42a

42b

TO BE SWITCHED

41b

WITHOUT CHANGE FROM
FRONT STAGE

40R2

40R3

# FIG.30

- - - - - DISCHARGE MODULE

——— REAR XY STAGE

# FIG.31

# FIG.32

REAR-STAGE COORDINATES

REAR STAGE PERFORMS LASER IRRADIATION

FRONT-STAGE COORDINATES

STOP LASER IRRADIATION AND MOVE TO BEHIND

EP 3 659 781 A1

FIG.33

(a) APPLY LASER LIGHT TO POSITION SEVERAL MILLIMETERS AHEAD IN NOZZLE TRAVELING DIRECTION

(b) LASER IRRADIATION POSITION REACHES NOZZLE DIRECTION SWITCHING POSITION

40R3

(c) MOVE XY STAGE RESPONSIBLE FOR LASER IRRADIATION

FRONT

(d) NOZZLE REACHES DIRECTION SWITCHING POSITION

(e) APPLY LASER TO POSITION SEVERAL MILLIMETERS AHEAD IN NOZZLE TRAVELING DIRECTION

# FIG.34

APPLY LASER TO POSITION SEVERAL
MILLIMETERS AHEAD AND PERFORM
AIR-COOLING AT POSITION SEVERAL METERS
BEHIND IN NOZZLE TRAVELING DIRECTION

(a)

NOZZLE REACHES DIRECTION
SWITCHING POSITION, PERFORM AIR-COOLING AT
POSITION SEVERAL MILLIMETERS AHEAD, AND APPLY
LASER TO POSITION SEVERAL METERS
BEHIND IN NOZZLE TRAVELING DIRECTION

(d)

40R2

LASER IRRADIATION POSITION
REACHES NOZZLE DIRECTION
SWITCHING POSITION

(b)

40R2

SWITCH BETWEEN LASER IRRADIATION
FUNCTION AND AIR-COOLING FUNCTION,
AND APPLY LASER TO POSITION SEVERAL
MILLIMETERS AHEAD IN NOZZLE TRAVELING DIRECTION

(e)

STOP AIR-COOLING AND LASER
IRRADIATION AND START TO MOVE EACH OF XY STAGES

(c)

FRONT

EP 3 659 781 A1

# FIG.35

# FIG.36

# FIG.37

T1

ST

T2

Europäisches
Patentamt

European
Patent Office

Office européen
des brevets

# EUROPEAN SEARCH REPORT

Application Number

EP 19 20 8422

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | JP 2019 084814 A (RICOH CO LTD) 6 June 2019 (2019-06-06) * FIG. 5 is a plan view of the heating module in one embodiment as viewed from the modeling table 3 side. In FIG. 5, the heating module 20 is attached to the rotation stage RS. The rotation stage RS rotates around the discharge nozzle 18. The laser light source 21 rotationally moves with the rotation of the rotary stage RS. Thus, even if the moving direction of the discharge nozzle 18 changes, the laser light source 21 can irradiate the laser light ahead of the discharge position by the discharge nozzle 18.; paragraphs [0036], [0060], [0110], [0111], [0112]; figures * ----- | 1-3,7-14 | INV. B29C64/118 B29C64/106 B29C64/295 |
| X | WO 2015/193819 A2 (SABIC GLOBAL TECHNOLOGIES BV [NL]) 23 December 2015 (2015-12-23) * paragraph [0034] * ----- -/-- | 1-14 | TECHNICAL FIELDS SEARCHED (IPC) B29C B33Y |

The present search report has been drawn up for all claims

| Place of search | Date of completion of the search | Examiner |
|---|---|---|
| The Hague | 9 April 2020 | Zattoni, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 19 20 8422

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 205 291 595 U (PRINT-RITE UNICORN IMAGE PRODUCTS CO LTD OF ZHUHAI) 8 June 2016 (2016-06-08) * Laser aid 3 includes rotating seat 31 and the emitting module 32 being connected with rotating seat 31, rotating seat 31 is arranged in the form of annular discsly, rotating seat 31 is penetratingly provided with through hole 33 at middle part along axis, emitting module 32 includes connecting rod and transmitter unit, transmitter unit is laser beam emitting head, and connecting rod is that arcuation ground is arranged, and the upper end of connecting rod is connected with rotating seat 31, transmitter unit is arranged on the bottom of connecting rod, and transmitter unit irradiates towards the peripheral region of extrusion nozzle 21. With reference to Fig. 5, laser aid 3 is arranged on printhead 3, specifically, rotating seat 31 utilizes through hole 33 to be enclosed within outside conduit 23 and is arranged on the top of heater 22, rotating seat 31 can rotate around conduit 23, namely rotating seat 31 can rotate to position as shown in Figure 5 from the position shown in Fig. 3, and the rotation type of drive of rotating seat 31 has multiple, as arranged motor in rotating seat 31 and arranging corresponding gear outside conduit 23, just the rotation of rotating seat 31 can be realized by the rotation of motor, and for example motor is set outside rotating seat 31, the same rotation realizing rotating seat 31 is connected with the outer wall of rotating seat 31 by motor, for another example stator is arranged on conduit 23 and rotor is arranged on rotating seat 31, it also | 1-3,8-14 | |
| | | | **TECHNICAL FIELDS SEARCHED (IPC)** |

The present search report has been drawn up for all claims

| Place of search | Date of completion of the search | Examiner |
|---|---|---|
| The Hague | 9 April 2020 | Zattoni, Federico |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | is able to realize the rotation of rotating seat 31 by the cooperation of stator and rotor.;<br>figures 7,8 *<br><br>----- | | |

TECHNICAL FIELDS
SEARCHED      (IPC)

The present search report has been drawn up for all claims

| Place of search | Date of completion of the search | Examiner |
|---|---|---|
| The Hague | 9 April 2020 | Zattoni, Federico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

page 3 of 3

## ANNEX TO THE EUROPEAN SEARCH REPORT
## ON EUROPEAN PATENT APPLICATION NO.

EP 19 20 8422

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2020

| Patent document cited in search report | Publication date | Patent family member(s) | Publication date |
|---|---|---|---|
| JP 2019084814 A | 06-06-2019 | NONE | |
| WO 2015193819 A2 | 23-12-2015 | CN 106660268 A | 10-05-2017 |
| | | EP 3154770 A2 | 19-04-2017 |
| | | JP 6338700 B2 | 06-06-2018 |
| | | JP 2017523063 A | 17-08-2017 |
| | | KR 20170004015 A | 10-01-2017 |
| | | US 2017157845 A1 | 08-06-2017 |
| | | US 2019381783 A1 | 19-12-2019 |
| | | WO 2015193819 A2 | 23-12-2015 |
| CN 205291595 U | 08-06-2016 | NONE | |

EPO FORM P0459

For more details about this annex : see Official Journal of the European Patent Office, No. 12/82

**EP 3 659 781 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018122454 A